# EUROPEAN PATENT APPLICATION

(11) **EP 4 755 227 A1**
(43) Date of publication of application: **10.06.2026**
(21) Application number: 24849512.9
(22) Date of filing: 26.07.2024
(51) Int. Cl.: A24F 40/53, A24F 40/50, A24F 40/57, A24F 40/90, A24F 40/95, A24F 40/46, A24F 40/42, A24F 40/51, A24F 40/60, A24F 40/65

(54) **AEROSOL-GENERATING DEVICE AND AEROSOL-GENERATING SYSTEM COMPRISING SAME**

(30) Priority: 01.08.2023 KR 20230100355; 04.08.2023 KR 20230102236; 24.10.2023 KR 20230143251; 27.11.2023 KR 20230167185
(71) Applicant: KT&G Corporation, Daedeok-gu Daejeon 34337 (KR)
(72) Inventor: KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JANG, Chul Ho, Bucheon-si, Gyeonggi-do 14725 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/010932
(87) International publication number: WO 2025/028943

(57) **Abstract**

An aerosol generating device may include a body which forms an exterior of the aerosol generating device, an aerosol generator configured to generate an aerosol from an aerosol generating material, a battery coupling unit to which a battery for power supply is removably coupled, a battery cover which is removably coupled to the body and optionally opens or closes the battery coupling unit, a liquid sensor configured to detect a liquid that penetrated between the body and the battery cover and generate a signal according to whether the liquid is detected, and a processor configured to control the aerosol generating device in response to the signal generated by the liquid sensor.

## Description

### Technical Field

The present disclosure relates to an aerosol generating device and an aerosol generating system including the same, and more particularly, to an aerosol generating device which includes a battery coupling unit capable of accommodating a removable battery and detecting liquid penetrating into an electrode in contact with a detachable battery, and an aerosol generating system including the aerosol generating device.

### Background Art

The demand for aerosol generating devices that produce aerosols through a non-combustion method, instead of burning cigarettes to generate aerosols, is increasing. An aerosol generating device, for example, is a device that generates aerosols from an aerosol generating material using a non-combustion method and supplies them to the user, or generates flavored aerosols by passing vapor produced from the aerosol generating material through a flavoring medium.

Aerosol generating devices may receive power from batteries. In this case, the batteries may be removable from the aerosol generating devices. An aerosol generating device may include a battery coupling unit capable of accommodating a removable battery and a battery cover for selectively opening or closing the battery coupling unit.

However, when the battery of the aerosol generating device is configured as a detachable battery, water may penetrate into the device during an insertion and removal process of the detachable battery. Because an electrode in contact with the detachable battery is formed to be exposed, water that penetrated into the device may come into contact with the electrode, which may cause failure of internal elements of the device due to overcurrent and overvoltage.

### Disclosure of Invention

### Technical Problem

Liquids may penetrate through gaps between a battery cover for opening or closing a battery coupling portion of an aerosol generating device and other components. The liquid penetrating through the gaps between the battery cover and the other components may flow into other parts and cause electrical problems.

The technical objective of the present disclosure is to provide an aerosol generating device in which water penetrating into an electrode in contact with a detachable battery may be detected.

The objective to be achieved through various embodiments of the present disclosure is to provide an aerosol generating device in which liquid penetrating into gaps between a battery cover and other components is detected early and notified to the user, thereby ensuring safety of the user, and an aerosol generating system including same.

Another objective to be achieved through various embodiments of the present disclosure is to provide an aerosol generating device in which liquid penetrating through gaps between a battery cover and other components is detected early so that power of the battery is stopped, thereby preventing damage to the aerosol generating device, and an aerosol generating system including same.

The technical problems of the present disclosure are not limited to the above-described description, and other technical problems may be clearly understood by one of ordinary skill in the art from the embodiments to be described hereinafter.

### Solution to Problem

An aerosol generating device for generating an aerosol may include a body which forms an exterior of the aerosol generating device, an aerosol generator configured to generate an aerosol from an aerosol generating material, a battery coupling unit to which a battery for power supply is removably coupled, a battery cover which is removably coupled to the body and optionally opens or closes the battery coupling unit, a liquid sensor configured to detect liquid that penetrated between the body and the battery cover and generate a signal according to whether the liquid is detected, and a processor configured to control the aerosol generating device in response to the signal generated by the liquid sensor.

The liquid sensor may include a first pad and a second pad. The first pad and the second pad may be each electrically conductive, may be arranged a certain distance apart from each other, and may face each other.

The first pad may be arranged in the body. The second pad may be arranged in the battery cover.

The liquid sensor may be configured to generate a signal in response to whether there is an electrical connection between the first pad and the second pad.

The liquid sensor may be configured to generate a signal in response to a change in an electric capacity between the first pad and the second pad.

The liquid sensor may be electrically conductive, may include an electrical resistor, and may be configured to generate a signal in response to a change in an electrical resistance value of the electrical resistor.

The aerosol generating device may include a sealing member. The sealing member may be arranged between the body and the battery cover. The sealing member may prevent liquid penetration between the body and the battery cover toward the battery coupling unit.

The aerosol generating device may further include a first display configured to output visual information.

The processor may be configured to control the display in response to the signal generated by the liquid sensor.

The aerosol generating device may further include a first audio output unit for outputting auditory information.

The processor may be configured to control the audio output unit according to the signal generated by the liquid sensor.

The processor may be configured to stop power supply of the battery in response to the signal generated by the liquid sensor, when it is determined that the liquid penetrated between the body and the battery cover.

The aerosol generating device may further include a memory which stores information.

The processor may be configured to store, in the memory, information corresponding to the signal generated by the liquid sensor.

An aerosol generating device according to another aspect includes an input unit configured to a user input, a heating unit configured to heat an aerosol generating material according to the user input, a terminal unit electrically contacting a detachable battery for supplying power to the heating unit, a water detection unit configured to detect water penetrating into the terminal unit, and a processor configured to control power supplied to the heating unit based on a detection result of the water detection unit.

An aerosol generating system according to another aspect may include an aerosol generating device, an external device communicable with the aerosol generating device, wherein the aerosol generating device may be configured to transmit, to the external device, information corresponding to the signal generated by the liquid sensor.

The external device may include a second display configured to output visual information. The external device may be configured to control the second display in response to the information received from the aerosol generating device.

The external device may include a second audio output unit configured to output auditory information. The external device may be configured to control the second audio output unit in response to the information received from the aerosol generating device.

### Advantageous Effects of Invention

An aerosol generating device and an aerosol generating system including same, according to various embodiments of the present disclosure, include a liquid sensor arranged between a battery cover and a body, and early detect liquid that penetrated and notifies same to the user, thereby ensuring safety of the user of the aerosol generating device.

An aerosol generating device and an aerosol generating system including same, according to various embodiments of the present disclosure, include a liquid sensor arranged between a battery cover and a body, and early detect liquid that penetrated, and stop power of a battery, thereby preventing damage to the aerosol generating device.

In an aerosol generating device of the present disclosure, power is supplied to elements of the aerosol generating device by using a detachable battery so that the user inconvenience due to device charging is eliminated.

In addition, the aerosol generating device may detect water in contact with an electrode electrically contacting the detachable battery, and when the electrode comes into contact with water, power supplied to a heating unit is stopped despite a user input, thereby preventing device failure due to overcurrent and overvoltage.

In addition, the aerosol generating device may notify the submergence status through an output unit when the electrode comes into contact with water, so as to request rapid removal of the detachable battery, thereby further enhancing user safety.

In addition, the aerosol generating device may forcibly remove the detachable battery from the device when the electrode comes into contact with water, thereby preventing device failure and enhancing user safety.

However, effects of the embodiments are not limited to the above-described effects, and effects not mentioned may be clearly understood by one of ordinary skill in the art to which the embodiments.

### Brief Description of Drawings

FIG. 1 is a perspective view illustrating an aerosol generating device according to an embodiment of the present disclosure.
FIG. 2 shows an aerosol generating device of various embodiments of the present disclosure.
FIG. 3 shows an aerosol generating device of various embodiments of the present disclosure.
FIG. 4 shows an aerosol generating device of various embodiments of the present disclosure.
FIG. 5 shows an aerosol generating device of various embodiments of the present disclosure.
FIG. 6 shows an aerosol generating device of various embodiments of the present disclosure.
FIG. 7 is a perspective view for describing an aerosol generating device according to an embodiment of the present disclosure.
FIG. 8 is a cross-sectional view taken along line VII-VII of FIG. 7.
FIG. 9 is a perspective view for describing an aerosol generating system according to an embodiment of the present disclosure.
FIG. 10 is a block diagram of an aerosol generating device according to an embodiment of the present disclosure.
FIG. 11 is a diagram for describing an aerosol generating system according to an embodiment.
FIGS. 12A to 12E are diagrams illustrating embodiments of the aerosol generating device of

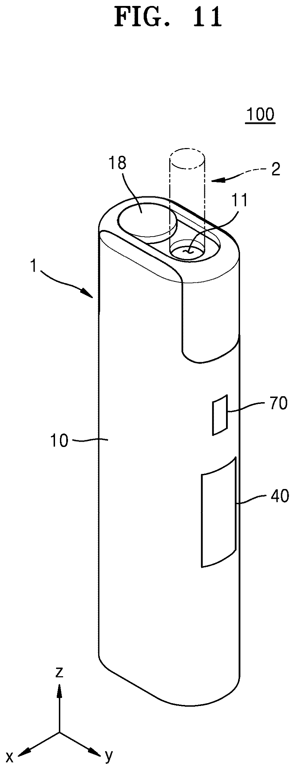

FIG. 11, implemented in various types.

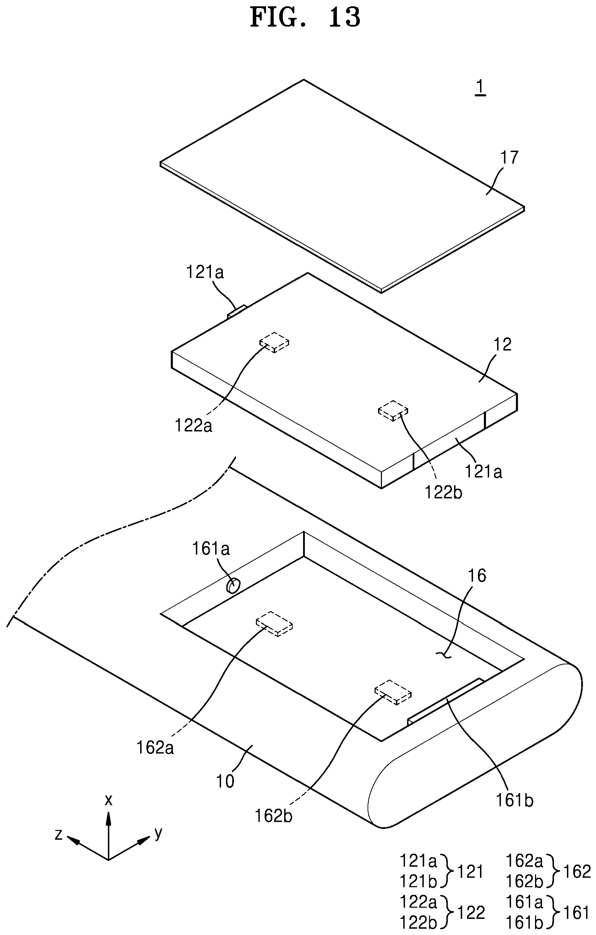

FIG. 13 is an exploded perspective view of some configurations of an aerosol generating device for describing a method of coupling and removing a detachable battery, according to an embodiment.

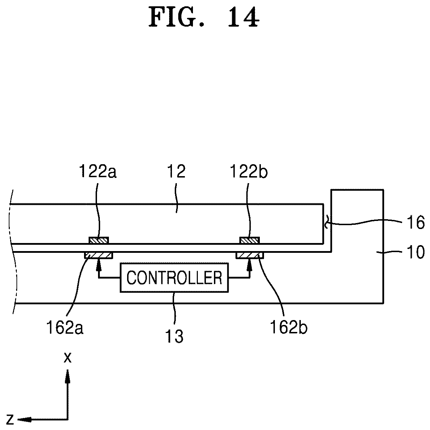

FIG. 14 is a cross-sectional view of some configurations of an aerosol generating device for describing a method of coupling and removing a detachable battery, of an embodiment.

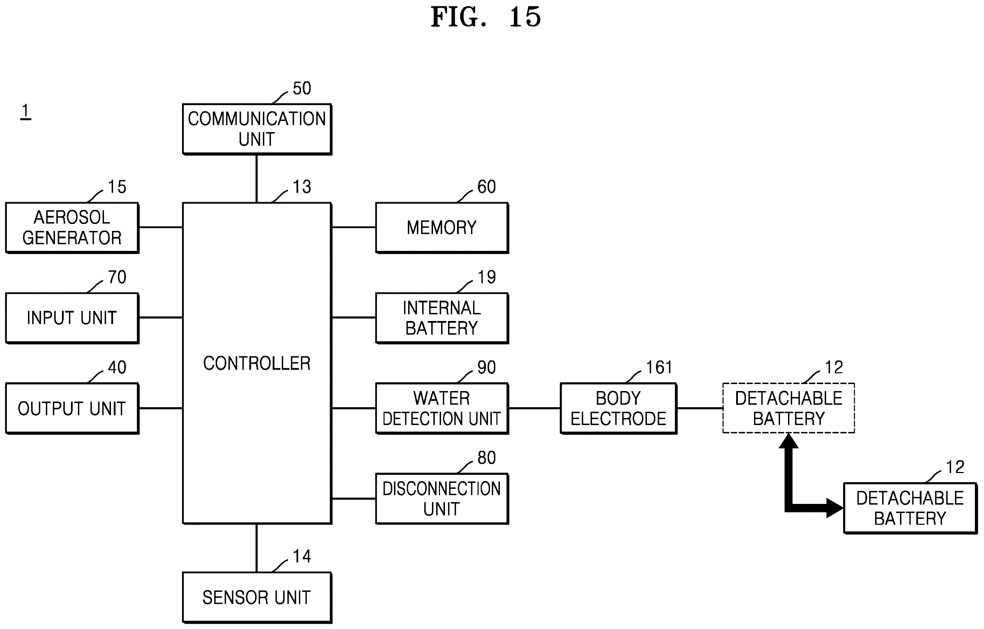

FIG. 15 is a block diagram of the inside of an aerosol generating device of an embodiment.

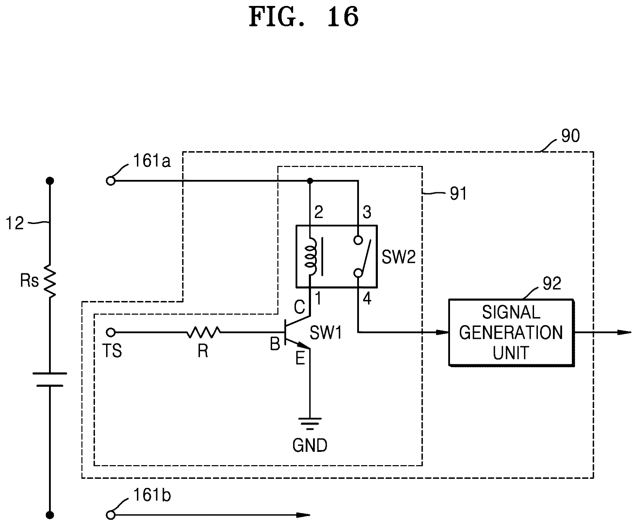

FIG. 16 is a circuit diagram of a water detection unit according to an embodiment.

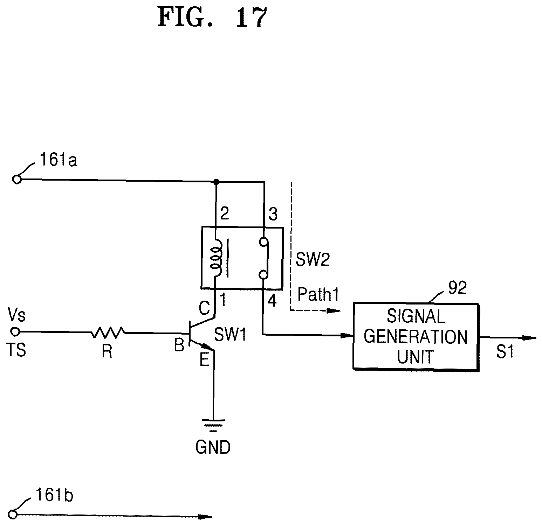

FIG. 17 is a diagram for describing a circuit operation according to a water detection result of a water detection unit of FIG. 15.

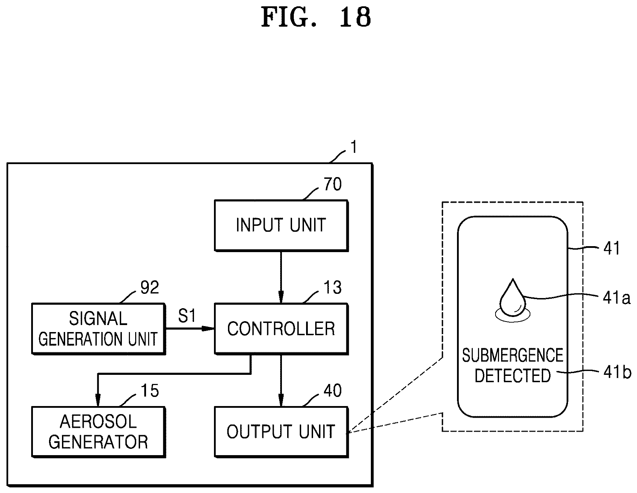

FIG. 18 is a diagram for describing an operating method of an output unit according to a water detection result of the water detection unit of FIG. 15.

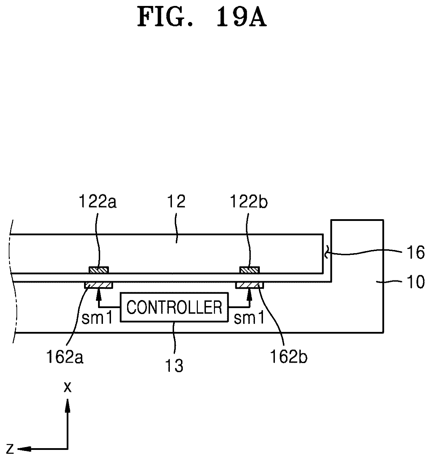

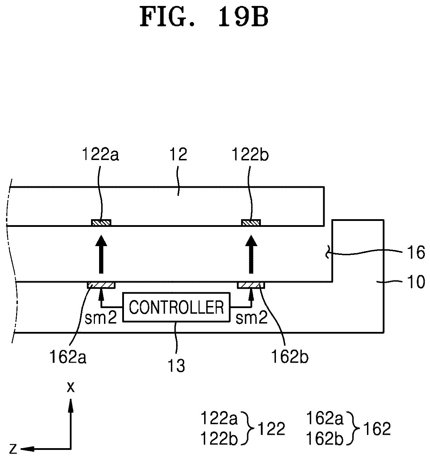

FIGS. 19A and 19B are diagrams for describing a method of coupling and removing a detachable battery according to a water detection result of the water detection unit of FIG. 15.

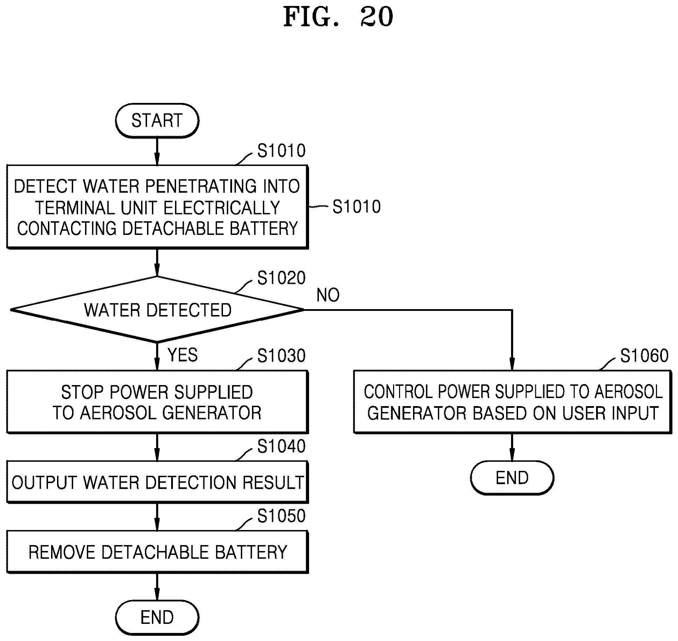

FIG. 20 is a flowchart of an operating method of an aerosol generating device of an embodiment.

### Best Mode for Carrying out the Invention

Various embodiments will be explained in detail hereinafter. The same or similar components will be assigned the same reference numerals regardless of the reference numerals in the drawings, and the same descriptions thereof will be omitted.

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof. The terms "-er", "-or", and "module" described herein are only introduced or used as element names for considering convenience of describing the specification. Therefore, the terms themselves do not have any distinct meanings or functions.

In addition, when describing the embodiments of the disclosure, the detailed description of the related known art, which may obscure the subject matter of the embodiments, may be omitted. Also, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

Although the terms first, second, etc. may be used herein to describe various elements or components, these elements or components should not be limited by these terms. These terms are only used to distinguish one element or component from another element or component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The singular forms are intended to include the plural forms as well, unless the context clearly indicates otherwise.

Hereinafter, the present disclosure will now be described more fully with reference to the accompanying drawings, in which exemplary embodiments of the present disclosure are shown such that one of ordinary skill in the art may easily work the present disclosure. However, the present disclosure may be implemented in various different forms and is not limited to the embodiments described herein.

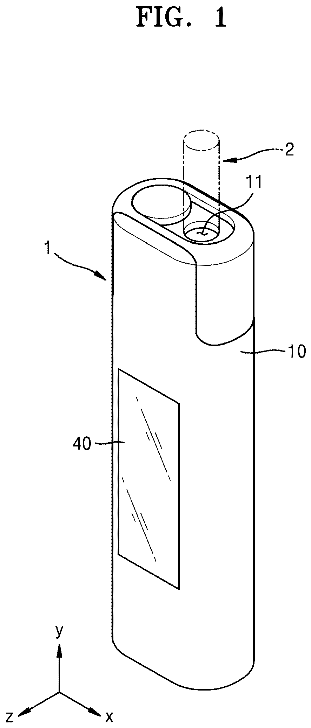

FIG. 1 is a perspective view illustrating an aerosol generating device according to an embodiment of the present disclosure.

The aerosol generating device 1 can generate and provide aerosols.

The aerosol generating device 1 may include a main body 10. The main body 10 forms the overall exterior of the aerosol generating device 1 and may include an internal space. At least one of an article accommodation portion 11, a heater (not shown), a controller (not shown) and a battery (not shown) may be arranged inside the main body 10.

The article accommodation portion 11 may provide a space where an aerosol-generating article 2 can be detachably coupled or inserted. The aerosol generating article 2 may include an aerosol generating material that is heated by the heater to produce an aerosol. The article accommodation portion 11 may provide a space opened toward the exterior of the main body 10 to allow the aerosol generating article 2 to the inserted thereinto.

The article accommodation portion 11 may be formed by being recessed toward the interior of the main body 10 so that at least a part of the aerosol generating article 2 may be inserted into the insertion space. The depth of the article accommodation portion 10h may correspond to a length of a region in the aerosol generating article 2 including an aerosol generating material and/or a medium. A portion of the aerosol generating article 2 may be inserted into the main body 10, and another portion of the aerosol generating article 2 may protrude to the outside of the main body 10. A user may inhale air by holding, in the mouth, the portion of the aerosol generating article 2 exposed to the outside.

An aerosol generator (not shown) may generate from aerosol generating material. The aerosol generator may be arranged inside of main body 10. The aerosol generator (not shown) disposed inside the main body 10 may heat the aerosol-generating article 2. For example, the aerosol generator may include at least one of a tube-type heater, a plate-type heater, a needle-type heater and a rod-type heater. The aerosol generator may include an electrically resistive heater and/or an induction heater.

For example, the aerosol generator may be a resistive heater. The aerosol generator may include an electrically conductive track, and be heated as a current flows through the electrically conductive track. The aerosol generator may be electrically connected to a power source. The aerosol generator may generate heat by receiving a current from the power source.

For example, the aerosol generator may be a multiple heater. The aerosol generator may include a first heater and a second heater. The first heater and the second heater may be heated sequentially or simultaneously.

The aerosol generating device 1 may include an induction coil. The induction coil may make the aerosol generator generate heat. The aerosol generator may include a susceptor. The susceptor may generate heat by a magnetic field generated by an AC current flowing through the induction coil. The magnetic field may penetrate the susceptor and generate an eddy current within the susceptor. The eddy current may make the susceptor generate heat.

In another example, the susceptor may be included inside the aerosol generating article 2. The susceptor inside the aerosol generating article 2 may generate heat by a magnetic field generated by an AC current flowing through the induction coil. The susceptor may be disposed inside the aerosol generating article 2 and may not be electrically connected to the aerosol generating device. The susceptor may be inserted into the article accommodation portion 10h together with the aerosol generating article 2 and may be removed from the article accommodation portion 10h together with the aerosol generating article 2. When an AC current flows through the induction coil, the aerosol generating article 2 may be heated by the susceptor inside the aerosol generating article 2.

The power source may supply power such that the components of the aerosol-generating device 1 operate. The power source may be a battery capable of storing electric power. The power source may provide electric power to components such as the aerosol generator, the induction coil, and the controller.

The controller may control overall operations of the aerosol-generating device 1. The controller may be mounted on a printed circuit board (PCB). The controller may control an operation of at least one of the aerosol generator, the induction coil or the power supply. The controller may control the operation of components such as a display, an actuator (motor), etc. installed in the aerosol generating device 1. The controller may check a state of each of the components of the aerosol-generating device 1 to determine whether the aerosol-generating device 1 is in an operable state.

According to the present disclosure, the aerosol generating device 1 may include an output unit 40. The output unit 40 may output information about a state of the aerosol generating device 1 and provide same to a user. The output unit 40 may include at least one of a display, a haptic unit, and an audio output unit, but is not limited thereto.

The display may output visual information to the outside. The display may visually provide information about the aerosol generating device 1 to the user. For example, the information about the aerosol generating device 1 may refer to various information, such as a charge/discharge state of a battery of the aerosol generating device 1, a preheating state of an aerosol generator, an insertion/removal state of an aerosol generating article and/or cartridge, a mounting/removal state of a cap, or a state in which the use of the aerosol generating device 1 is limited (e.g., a state in which an incompatible battery is coupled), and the display may output the information to the outside. For example, the display may be in the form of an LED light-emitting element. For example, the display may be a liquid crystal display panel (LCD), an organic light-emitting display panel (OLED), or the like.

The audio output unit may audible information to the user about the aerosol generating device 1. For example, the audio output unit may convert an electric signal into an audio signal and output same to the outside.

### Mode for the Invention

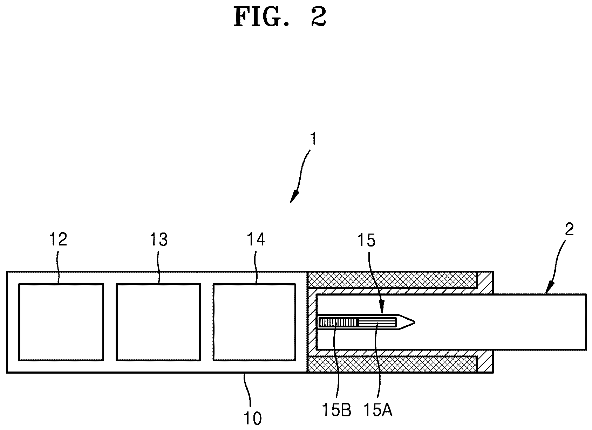

FIGS. 2 to 4 show an aerosol generating device according to various embodiments of the present disclosure.

Referring to FIG 2, the aerosol-generating device 1 according to an embodiment of the present disclosure may include at least one of a battery 12, a controller 13, a sensor unit 14, or an aerosol generator 15. At least one of the battery 12, the controller 13, the sensor unit 14, and the aerosol generator 15 may be disposed inside a main body 10 of the aerosol-generating device 1.

The main body 10 may provide a space opened toward one side to allow an aerosol generating article 2 to the inserted thereinto. The space opened toward the one side may be referred to as an article accommodation portion. The article accommodation portion may be formed by being recessed toward the interior of the main body 10 to a preset depth so that at least a part of the aerosol generating article 2 may be inserted into the insertion space. The depth of the article accommodation portion may correspond to a length of a region in the aerosol generating article 2 including an aerosol generating material and/or a medium. A lower end of the aerosol generating article 2 may be inserted into the main body 10, and an upper end of the aerosol generating article 2 may protrude to the outside of the main body 10. A user may inhale air by holding, in the mouth, the upper end of the aerosol generating article 2 exposed to the outside.

The aerosol generator 15 may heat the aerosol generating article 2. The aerosol generator 15 may extend outward in the longitudinal direction of the space where the aerosol generating article 2 is inserted. For example, the aerosol generator 15 may include at least one of a tube-type heater, a plate-type heater, a needle-type heater and a rod-type heater. The aerosol generator 15 may be inserted into one end of the aerosol generating article 2. The aerosol generator 15 may include an electrically resistive heater and/or an induction heater.

For example, referring to FIG. 2, the aerosol generator 15 may be a resistive heater. For example, the aerosol generator 15 may include an electrically conductive track, and be heated as a current flows through the electrically conductive track. The aerosol generator 15 may be electrically connected to the battery 12. The aerosol generator 15 may directly generate heat by receiving a current from the battery 12.

For example, the aerosol generator 15 may be a multiple heater. The aerosol generator 15 may include a first heater 15A and a second heater 15B. The first heater 15A and the second heater 15B may be arranged side by side along the longitudinal direction. The first heater 15A and the second heater 15B may be heated sequentially or simultaneously.

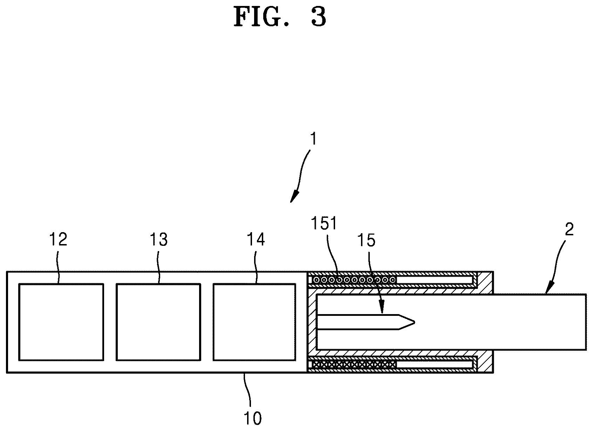

For example, referring to FIG. 3, the aerosol-generating device 1 may include an induction coil 151 surrounding the aerosol generator 15. The induction coil 151 may make the aerosol generator 15 generate heat. The aerosol generator 15, which is a susceptor, may generate heat by a magnetic field generated by an AC current flowing through the induction coil 151. The magnetic field may penetrate the aerosol generator 15 and generate an eddy current within the aerosol generator 15. The current may generate heat in the aerosol generator 15. The current may generate heat in the aerosol generator 15.

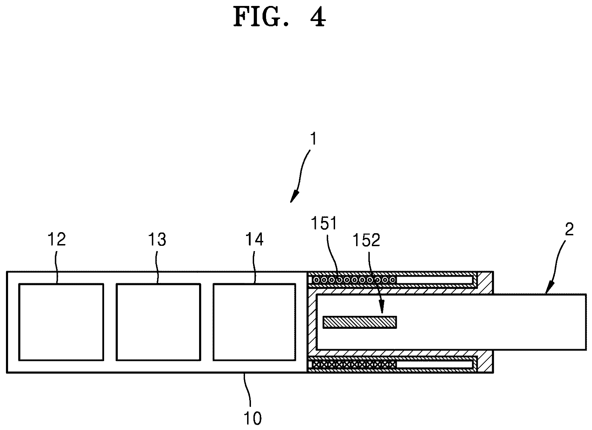

For example, referring to FIG. 4, the susceptor 152 may be included inside the aerosol generating article 2, and the susceptor 152 inside the aerosol generating article 2 may generate heat by a magnetic field generated by an AC current flowing through the induction coil 151. The susceptor 152 may be disposed inside the aerosol generating article 2 and may not be electrically connected to the aerosol generating device. The susceptor 152 may be inserted into the article accommodation portion together with the aerosol generating article 2 and may be removed from the article accommodation portion together with the aerosol generating article 2. The aerosol generating article 2 may be heated by the susceptor inside the aerosol generating article 2.

The battery 12 may supply power such that the components of the aerosol-generating device 1 operate. The battery 12 may supply power to at least one of the controller 13, the sensor unit 14, or the heater 15. The battery 12 may supply power to the induction coil 151.

The controller 13 may control overall operations of the aerosol-generating device 1. The controller 13 may be mounted on a printed circuit board (PCB). The controller 13 may control an operation of at least one of the battery 12, the sensor unit 14 or the aerosol generator 15. The controller 13 may control the operation of the induction coil 151. The controller 13 may control the operation of components such as a display, an actuator (motor), etc. installed in the aerosol generating device 1. The controller 13 may check a state of each of the components of the aerosol-generating device 1 to determine whether the aerosol generating device 1 is in an operable state.

The controller 13 may analyze a result detected by the sensor unit 14 and control processes to be performed subsequently. For example, the controller 13 may control the power supplied to the aerosol generator 15 such that the operation of the aerosol generator 15 starts or ends based on a result detected by the sensor unit 14. For example, the controller 13 may control an amount of power supplied to the aerosol generator 15 and a time for which the power is supplied to the aerosol generator 15 such that the aerosol generator 15 may be heated to a preset temperature or maintained at an appropriate temperature based on the result detected by the sensor unit 14.

The sensor unit 14 may include at least one of a temperature sensor, a puff sensor, or an insertion detection sensor. For example, the sensor unit 14 may sense at least one of the temperature of the aerosol generator 15, the temperature of the battery 12, or the temperature inside and outside the main body 10. For example, the sensor unit 14 may sense a puff by the user. For example, the sensor unit 14 may sense whether the aerosol generating article 2 has been inserted into the insertion space. For example, the sensor unit 14 may sense a movement of the aerosol generating device 1.

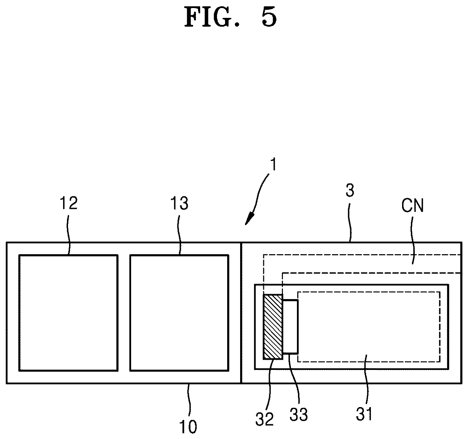

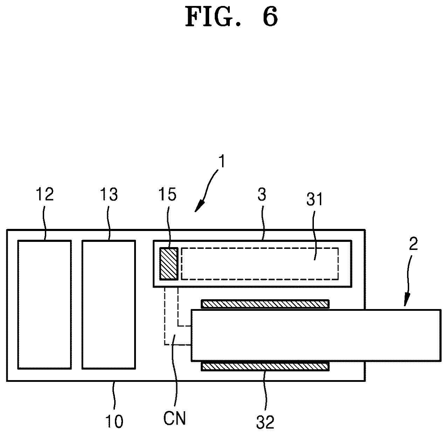

FIGS. 5 and 6 show the aerosol generating device 1 according to various embodiments of the present disclosure.

Referring to FIG 5, the aerosol generating device 1 may include a cartridge 3 and the main body 10. The aerosol generating device 1 may include at least one of a battery 12, a controller 13 and a sensor (not shown). At least one of the battery 12 and the controller 13 may be arranged inside a main body 10 of the aerosol generating device 1. The main body 10 may be equipped with a cartridge 3 containing an aerosol generating material. The user may place a mouthpiece (not shown) provided at one end of the cartridge 3 in their mouth and inhale the aerosol.

The cartridge 3 may contain an aerosol generating material in any one of a liquid state, a solid state, a gaseous state, a gel state, and the like within a storage space 31. The aerosol generating material may include a liquid composition. For example, the liquid composition may be a liquid including a tobacco-containing material having a volatile tobacco flavor component, or a liquid including a non-tobacco material.

The cartridge 3 may be detachably coupled to the main body 10. The cartridge 3 may be mounted to the main body 10 by being coupled to the main body 10.

The main body 10 may be formed in a structure in which external air may be introduced into the main body 10 while the cartridge 3 is coupled to the main body 10. Here, the external air introduced into the main body 10 may pass through the cartridge 3 and flow into the mouth of the user.

The cartridge 3 may include a storage space 31 containing the aerosol generating material and/or a generation unit 32 The generation unit 32 may heat the aerosol generating material inside the storage space 31. The cartridge 3 may include a liquid delivery element 33 capable of absorbing the aerosol generating material. Here, the liquid delivery element 33 may include a wick or the like such as a cotton fiber, a ceramic fiber, a glass fiber, or porous ceramic. An electrically conductive track of the generation unit 32 may be formed in a coil-shaped structure that is wound around the liquid delivery element or in a structure in contact with one side of the liquid delivery element 33. The generation unit 32 may be referred to as 'a cartridge heater'.

The cartridge 3 may generate an aerosol. When the liquid delivery element 33 is heated by the generation unit 32 an aerosol may be generated. The aerosol may be inhaled into the mouth of the user through an air flow channel CN.

The air flow channel CN may be provided in the cartridge 3. The air flow channel CN may connect the generation unit 32 of the cartridge 3 to the exterior of the cartridge 3. One end of the air flow channel CN may be open to the generation unit 32, while the other end may be connected to the exterior. For example, the air flow channel CN may extend along the longitudinal direction of the cartridge 3 from the one side of the storage space 31 of the cartridge 3. For example, the air flow channel CN may pass through the cartridge 3 and extend along the longitudinal direction of the cartridge 3.

Referring to FIG 6, the aerosol generating device 1 according to an embodiment may accommodate the aerosol generating article 2. For example, the aerosol generating article 2 may be accommodated in the cartridge 3. As another example, the aerosol generating article 2 may be accommodated in the main body 10.

The aerosol generating article 2 may allow the aerosol generated by the generation unit 32 to pass through. The aerosol generating device 1 may include an article accommodation portion that accommodates the aerosol generating article 2. The aerosol generated inside the generation unit 32 may pass through the aerosol generating article 2 accommodated in the article accommodation portion and be discharged to the exterior of the aerosol generating device 1. At this time, the user may place their mouth on the aerosol generating article 2 and inhale the aerosol discharged to the exterior of the aerosol generating device 1 through the aerosol generating article 2.

Referring to FIG 6, the aerosol generating device 1 further include an aerosol generator 15 for heating the aerosol generating article 2. The aerosol generator 15 may heat the aerosol generating article 2. The aerosol generator 15 may extend longitudinally upward around the space into which the aerosol generating article 2 is inserted. The aerosol generator 15 may include an electrically resistive heater and/or an induction heater.

The controller 13 may control overall operations of the aerosol-generating device 1. The controller 13 may be mounted on a printed circuit board (PCB). The controller 13 may control an operation of at least one of the cartridge 3, the battery 12 or the sensor. For example, the controller 13 may control the operation of components such as a display (not shown), an audio output device (not shown), a haptic unit (not shown), and an actuator (motor) (not shown), etc. installed in the aerosol generating device 1. The controller 13 may check a state of each of the components of the aerosol-generating device 1 to determine whether the aerosol generating device 1 is in an operable state.

The controller 13 may analyze a result detected by the sensor and control processes to be performed subsequently. For example, the controller 13 may control the power supplied to the generation unit 32 such that the operation of the generation unit 32 starts or ends based on a result detected by the sensor. For example, the controller 13 may control an amount of power supplied to the generation unit 32 and a time for which the power is supplied to the generation unit 32 such that the generation unit 32 may be heated to a certain temperature or maintained at an appropriate temperature based on the result detected by the sensor.

The battery 12 may supply power to the components of the aerosol-generating device 1. For example, the battery 12 may supply electrical power to at least one of the controller 13, the sensor (not shown), or the aerosol generator 15.

The sensor may include at least one of a temperature sensor, a puff sensor, a cartridge detection sensor or a movement detection sensor. For example, the sensor may sense at least one of the temperature of the generation unit 32, the temperature of the battery 12, or the temperature inside and outside the main body 10. For example, the sensor may sense a puff by the user. For example, the sensor may sense whether the cartridge 3 is mounted. For example, the sensor may sense a movement of the aerosol generating device 1.

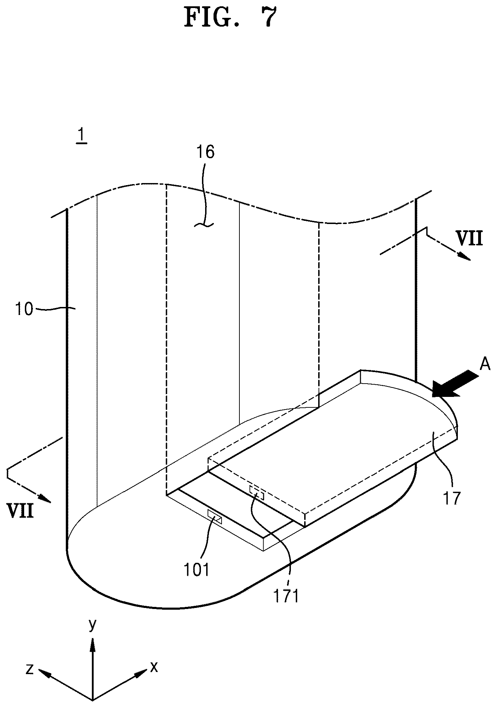

FIG. 7 is a diagram for describing an aerosol generating device according to an embodiment of the present disclosure. FIG. 7 is a perspective view for describing elements of the aerosol generating device 1 in detail.

The aerosol generating device 1 according to the present embodiment may include the same configuration as that of any aerosol generating device 1 among the embodiments described with reference to FIGS. 1 to 6, but is not limited thereto.

The aerosol generating device 1 may include a body 10. The body 10 may form the exterior and may include a space therein.

The aerosol generating device 1 may further include a battery coupling unit 16 and a battery cover 17.

A battery (not shown) capable of supplying power may be removably coupled to the battery coupling unit 16. The battery coupling unit 16 may include a space for coupling the battery (not shown). The battery coupling unit 16 may be arranged in one area inside the battery coupling unit 16. A body electrode (not shown) for electrical connection with a battery may be arranged inside the battery coupling unit 16.

The body 10 may include the battery cover 17 for selectively opening or closing the battery coupling unit 16. The battery cover 17 may be arranged in one area of the body 10. For example, the battery cover 17 may be arranged in an area corresponding to the battery coupling unit 16.

The battery cover 17 may be removably coupled to the body 10. The battery cover 17 may selectively open or close the battery coupling unit 16.

For example, the battery cover 17 may be moved to a closed position for closing the battery coupling unit 16 and may close the battery coupling unit 16 from the outside. The battery cover 17 may be moved out of the closed position so that the battery cover 17 may be opened toward the outside.

The battery cover 17 may be coupled to the body 10 in the closed position for closing the battery coupling unit 16. The battery cover 17 may be removed from the body 10 by moving out of the closed position.

FIG. 7 shows the battery cover 17 removed from the body 10 moving toward the closed position. Arrow A indicates a direction in which the battery cover 17 moves toward the closed position.

Referring to FIG. 7, the battery cover 17 may be moved in a -x direction to move to the closed position, and may close the battery coupling unit 16. When the battery cover 17 is moved to the closed position, the battery coupling unit 16 may be closed by the battery cover 17 and may not be exposed to the outside of the aerosol generating device 1.

The battery cover 17 arranged in the closed position may be moved in a +x direction (opposite of arrow A) and may open the battery coupling unit 16. When the battery cover 17 is moved in the +x direction from the closed position, the battery coupling unit 16 may be opened toward the outside and exposed to the outside of the aerosol generating device 1.

When the battery cover 17 is moved to the closed position and coupled to the body 10, the battery coupling unit 16 may be closed from the outside such that the battery (not shown) is not coupled or removed from the battery coupling unit 16, and foreign substances outside the aerosol generating device 1 may be prevented from entering the battery coupling unit 16.

When the battery cover 17 is removed from the body 10, the battery cover 17 is opened toward the outside, the battery may be coupled to the battery coupling unit 16 or may be removed from the battery coupling unit 16.

A direction (-y) in which the battery coupling unit 16 is opened and a position at which the battery cover 17 is arranged, shown in FIG. 7, are merely an example. The battery coupling unit 16 may be opened from a different side of the body 10 other than the -y direction, and the position at which the battery cover 17 is arranged may be determined according to the direction in which the battery coupling unit 16 is opened.

A structure for removable coupling of the body 10 and the battery cover 17 may be applied to at least some of the body 10, the battery coupling unit 16, and the battery cover 17. For example, a hook structure may be provided in the battery cover 17 and a groove for catching the hook structure may be provided in the body 10. In another example, a groove through which the battery cover 17 may slide may be provided in the body 10. In another example, the body 10 or the battery cover 17 may be provided with a button structure which allows the battery cover 17 to be removed from the body 10 by a pressing operation. In another example, the body 10 and the battery cover 17 may be removably coupled to each other by screws and screw threads. In another example, the body 10 and the battery cover 17 may be removably coupled to each other by using an electronic method. A configuration and structure in which the body 10 and the battery cover 17 may be removably coupled are not limited to those described above.

Meanwhile, according to the battery coupling unit 16 for removable batteries and a structure of the battery cover 17 which is removable from the body 10 and selectively opens or closes the battery coupling unit 16, a liquid may penetrate through a gap between the battery cover 17 and the body 10.

The liquid penetrating through the gap between the battery cover 17 and the body 10 may flow into the battery coupling unit 16 and cause problems with power supply of the battery. The liquid penetrating through the gap between the battery cover 17 and the body 10 may flow into other configurations inside the body 10 and cause electrical problems.

A sealing member (not shown) may be arranged between the body 10 and the battery cover 17. The sealing member may prevent liquid from penetrating between the body 10 and the battery cover 17 toward the battery coupling unit 16. The sealing member may include silicone, rubber, plastic, or the like, but materials thereof are not limited thereto.

According to the present disclosure, in order to prevent problems which may occur due to the penetration of liquid through a gap between the body 10 and the battery cover 17, a configuration may be further included to early detect liquid which penetrated between the battery cover 17 and the body 10.

For example, the aerosol generating device 1 may further include a liquid sensor (not shown). The liquid sensor may be included in a sensor unit. The liquid sensor may detect liquid which penetrated between the body 10 and the battery cover 17, and generate a signal according to whether liquid was detected.

For example, the liquid sensor may detect whether water has seeped between the body 10 and the battery cover 17, and generate a signal. In response to the signal generated by the liquid sensor, a processor (not shown) may control the aerosol generating device 1.

At least one of the body 10 and the battery cover 17 may include a groove in which the liquid sensor may be arranged. For example, referring to FIG. 7, the body 10 may include a first groove 101, and the battery cover 17 may include a second groove 171.

The liquid sensor may be arranged in at least one of the first groove 101 and the second groove 171. For example, the liquid sensor may be arranged in each of the first groove 101 and the second groove 171.

For example, when the battery cover 17 is coupled to the body 10, the first groove 101 and the second groove 171 may be arranged to face each other.

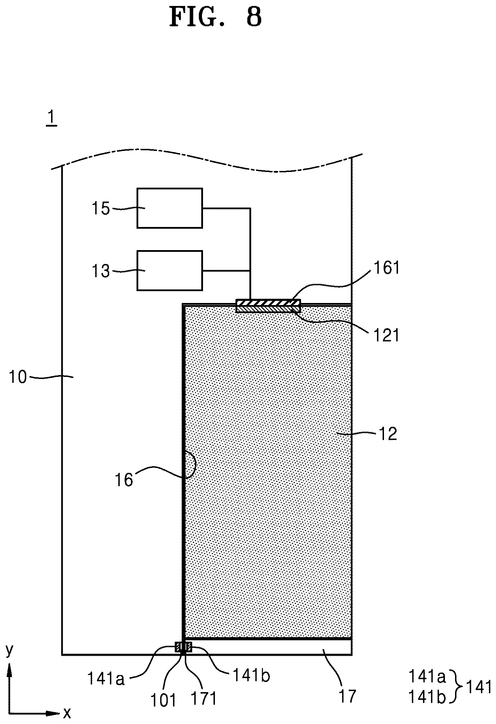

Below, the liquid sensor detecting liquid penetrating between the body 10 and the battery cover 17 and various embodiments based on the detection are described with reference to FIG. 8.

FIG. 8 is a diagram for describing an aerosol generating device according to an embodiment of the present disclosure.

The aerosol generating device 1 according to the present embodiment may include the same configuration as that of any aerosol generating device 1 among the embodiments described with reference to FIGS. 1 to 6, but is not limited thereto.

FIG. 8 is a schematic cross-sectional view for describing, in detail, configurations related to the battery coupling unit 16 and the battery cover 17 of the aerosol generating device 1 shown in FIG. 7. FIG. 8 is a cross-sectional view taken along line VII-VII of FIG. 7.

FIG. 7 is a perspective view illustrating a state in which the battery cover 17 is moved to a closed position, and FIG. 8 is a cross-sectional view illustrating a state in which the battery cover 17 is arranged in the closed position.

The aerosol generating device 1 and elements included therein, described with reference to FIG. 8, may have identical or similar configurations as the aerosol generating device 1 and elements included therein, described with reference to FIG. 7. Redundant descriptions thereof may be omitted to avoid repeated descriptions.

Referring to FIG. 8, the battery 12 may be accommodated in the battery coupling unit 16. As described above with reference to FIG. 7, the battery coupling unit 16 may be opened or closed by the battery cover 17.

When the battery coupling unit 16 is opened, the battery 12 may be inserted into the battery coupling unit 16 or discharged to the outside of the battery coupling unit 16.

After the battery 12 is inserted into the battery coupling unit 16, when the battery cover 17 is moved to the closed position and the battery coupling unit 16 is closed, the battery 12 may be fixed inside the battery coupling unit 16.

When a state shown in FIG. 8 is described, the battery 12 is arranged inside the battery 12, the battery cover 17 is in the closed position, and the battery cover 17 closes the battery coupling unit 16 so that the battery 12 is not discharged to the outside.

The battery coupling unit 16 may be arranged in one area inside the battery coupling unit 16. A body electrode 161 may be arranged in one area inside the battery coupling unit 16. The body electrode 161 may be a configuration for electrical connection with the battery 12. The body electrode 161 may receive current from the battery 12 and transfer the current to other configurations of the aerosol generating device 1. For example, at least some of a processor 13, a sensor unit 14, and an aerosol generator 15 may receive current from the battery 12 through the body electrode 161.

A battery electrode 121 may be arranged in one area of the battery 12. The battery electrode 121 may be a configuration for electrical connection with the body electrode 161. The battery electrode 121 may supply current to other configurations of the aerosol generating device 1 through the body electrode 161.

When the battery cover 17 is removed from the body 10, the battery 12 may be removed from the battery coupling unit 16. When the battery 12 is removed from the battery coupling unit 16, an electrical connection between the battery electrode 121 and the body electrode 161 may be released, and power supply of the battery 12 may be interrupted.

According to the present disclosure, problems which may occur due to penetration of liquid through a gap between the body 10 and the battery cover 17 may be prevented.

For example, the aerosol generating device 1 may further include a liquid sensor 141. The liquid sensor 141 may be included in the sensor unit described above. The liquid sensor 141 may detect liquid which penetrated between the body 10 and the battery cover 17, and generate a signal according to whether liquid was detected.

For example, the liquid sensor 141 may detect water which penetrated between the body 10 and the battery cover 17, and generate a signal according to whether water was detected. In response to the signal generated by the liquid sensor, the processor 13 may control other configurations of the aerosol generating device 1.

The liquid sensor 141 may include a "pad", which is an electrode with electric conductivity. The liquid sensor 141 may generate a signal according to a change which was made when the pad is in contact with liquid, such as water. The liquid sensor 141 may include one or more pads.

For example, the liquid sensor 141 may include a first pad 141a and a second pad 141b. The first pad 141a and the second pad 141b may each have electric conductivity and may be arranged to face each other at a certain distance apart from each other.

At least one of the body 10 and the battery cover 17 may include a groove in which the liquid sensor 141 may be arranged. For example, referring to FIG. 8, the body 10 may include a first groove 101, and the battery cover 17 may include a second groove 171.

The liquid sensor 141 may be arranged in at least one of the first groove 101 and the second groove 171. For example, the first pad 141a may be arranged in the first groove 101 and the second pad 141b may be arranged in the second groove 171. The first pad 141a may be arranged in the body 10 and the second pad 141b may be arranged in the battery cover 17.

However, according to the technical concept of the present disclosure, the arrangement of the liquid sensor 141 is not limited to those described above.

According to the present disclosure, the aerosol generating device 1 may include an output unit (not shown). The output unit may output information related to the aerosol generating device 1 and provide the information to the user. The output unit may include at least one of a display and an audio output unit, but is not limited thereto.

The display may output visual information to the outside. The display may visually provide information about the aerosol generating device 1 to the user.

The audio output unit may audible information to the user about the aerosol generating device 1. For example, the audio output unit may convert an electric signal into an audio signal and output the audio signal to the outside.

The aerosol generating device 1 may further include a memory (not shown). The memory is hardware for storing various data processed in the aerosol generating device 1 and may include data processed and data to be processed in the processor 13.

For example, the liquid sensor 141 may not generate an additional signal when liquid is not detected, and may generate a signal only when liquid is detected. In another example, the liquid sensor 141 may generate a first signal when liquid is not detected, and generate a second signal that is different from the first signal, when liquid is detected.

The liquid sensor 141 may detect liquid in various ways according to various embodiments as below.

According to an embodiment, a signal of the liquid sensor 141 may be an electrical resistance value. The liquid sensor 141 may include an electrical resistor (not shown). The electrical resistor may be arranged in a space into which liquid penetrating between the body 10 and the battery cover 17 may flow.

When liquid, such as water, comes into contact with the electrical resistor, the electrical resistance value may decrease. Accordingly, in a state where current is passed through the electrical resistor, when liquid penetrating through the body 10 and the battery cover 17 comes into contact with the electrical resistor, the electrical resistance value may decrease. The liquid sensor 141 may generate a signal in response to a change in an electrical resistance value of the electrical resistor.

For example, when liquid penetrating between the body 10 and the battery cover 17 comes into contact with the first pad 141a and/or the second pad 141b, the electrical resistance value of the first pad 141a and/or the second pad 141b may change, and in response thereto, the liquid sensor 141 may generate a signal regarding the electrical resistance value. According to the present embodiment, the electrical resistance value of the first pad 141a and/or the second pad 141b when a liquid was detected may be referred to as a first signal and the electrical resistance value of the first pad 141a and/or the second pad 141b which is changed due to detection of liquid may be referred to a second signal.

According to another embodiment, a signal of the liquid sensor 141 may be a signal corresponding to whether there is an electrical connection between the first pad 141a and the second pad 141b. When the battery cover 17 is coupled to the body 10, the first pad 141a and the second pad 141b may be a certain distance apart from each other, and may be arranged to face each other in a state where there is not an electrical connection. In this case, the liquid penetrating between the body 10 and the battery cover 17 flows between the first pad 141a and the second pad 141b, the first pad 141a and the second pad 141b may be electrically connected to each other through the liquid, and the liquid sensor 141 may generate a signal by the electrical connection between the first pad 141a and the second pad 141b. According to the present embodiment, the liquid sensor 141 may not generate an additional signal when liquid is not detected, and may generate a signal only when liquid is detected.

According to another embodiment, a signal of the liquid sensor 141 may be a signal corresponding to an electrical capacity between the first pad 141a and the second pad 141b. The liquid sensor 141 may further include a capacity sensor (not shown). When the battery cover 17 is coupled to the body 10, the first pad 141a and the second pad 141b may be a certain distance apart from each other, and may be arranged to face each other. In this case, the liquid penetrating between the body 10 and the battery cover 17 flows between the first pad 141a and the second pad 141b, an electric capacity between the first pad 141a and the second pad 141b may change, and the liquid sensor 141 may generate a signal in response to the change in an electric capacity between the first pad 141a and the second pad 141b. According to the present embodiment, a signal regarding an electric capacity between the first pad 141a and the second pad 141b when a liquid was detected may be referred to as a first signal and a signal regarding an electric capacity between the first pad 141a and the second pad 141b which is changed due to detection of liquid may be referred to as a second signal.

According to the present disclosure, the liquid sensor 141 is arranged between the battery cover 17 and the body 10 to generate a signal by early detecting liquid passing between the battery cover 17 and the body 10 before the liquid flows into other configurations, and the processor 13 may appropriately control the aerosol generating device 1 to prevent damage caused by liquid penetration. Below, embodiments are described in which the processor 13 controls other configurations in response to a signal received from the liquid sensor 141.

In response to the signal generated by the liquid sensor 141, the processor 13 may control other configurations of the aerosol generating device 1.

According to an embodiment of the present disclosure, in a case where a signal regarding liquid penetration is received from the liquid sensor 141, when it is determined that liquid penetrated between the body 10 and the battery cover 17, the processor 13 may stop power supply of the battery 12 and stop all operations of the aerosol generating device 1, thereby minimizing damage caused by the liquid.

According to an embodiment of the present disclosure, the processor 13 may control a display (not shown), an audio output unit (not shown), or the like of an output unit in response to a signal generated by the liquid sensor 141. For example, when a signal regarding liquid penetration is received from the liquid sensor 141, the processor 13 may control the display to output visual information to remove and/or replace the battery from the aerosol generating device 1. In another example, when a signal regarding liquid penetration is received from the liquid sensor 141, the processor 13 may control the display to output visual information to stop using the aerosol generating device 1 and stop power.

According to an embodiment of the present disclosure, the processor 13 may control an audio output unit (not shown) of an output unit in response to a signal generated by the liquid sensor 141. For example, when a signal regarding liquid penetration is received from the liquid sensor 141, the processor 13 may control the audio output unit to output auditory information to remove and/or replace the battery from the aerosol generating device 1. In another example, when a signal regarding liquid penetration is received from the liquid sensor 141, the processor 13 may control the audio output unit to output auditory information to stop using the aerosol generating device 1 and stop power. In another example, when a signal regarding liquid penetration is received from the liquid sensor 141, the processor 13 may control the audio output unit to output an alert sound.

According to an embodiment of the present disclosure, the processor 13 may store information corresponding to a signal generated by the liquid sensor 141. The information stored in the memory may be useful to analyze a cause of a problem when liquid-related problem occurs in the aerosol generating device 1 thereafter.

The embodiments of the present disclosure described above may be performed in combination.

For example, the processor 13 may first control the display and output visual information regarding liquid penetration, then store the related information in the memory, automatically stops power supply of the battery 12 after a certain time has elapsed, and stop all operations of the aerosol generating device 1, thereby minimizing damage caused by liquid.

In another example, the processor 13 may first control the audio output unit and output auditory information regarding liquid penetration, then store the related information in the memory, automatically stops power supply of the battery 12 after a certain time has elapsed, and stop all operations of the aerosol generating device 1, thereby minimizing damage caused by liquid.

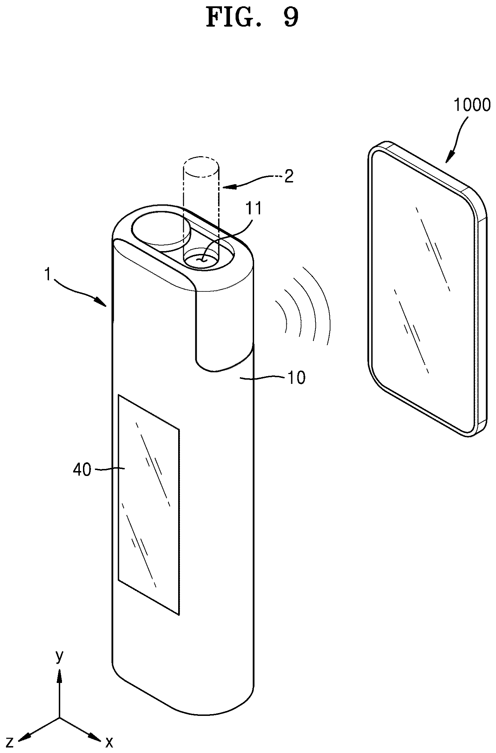

FIG. 9 is a diagram for describing an aerosol generating system according to an embodiment of the present disclosure.

The aerosol generating device 1 according to the present embodiment may include the same or similar configuration as that of any aerosol generating device 1 among the embodiments described with reference to FIGS. 1 to 6, but is not limited thereto.

The aerosol generating device 1 and elements included therein, described with reference to FIG. 9, may have identical or similar configurations as the aerosol generating device 1 and elements included therein, described above with reference to other drawings. Detailed descriptions of redundant elements may be omitted to avoid repeated descriptions.

According to the present disclosure, the aerosol generating device 1 may include the output unit 40. The output unit 40 may output information about a state of the aerosol generating device 1 and provide same to a user. The output unit 40 may include at least one of a first display (not shown) and a first audio output unit (not shown), but is not limited thereto.

The first display may provide visual information to the outside. The first display may visually provide information about the aerosol generating device 1 to the user. For example, the information about the aerosol generating device 1 may refer to various information, such as a charge/discharge state of a battery of the aerosol generating device 1, a preheating state of an aerosol generator, an insertion/removal state of an aerosol generating article and/or cartridge, a mounting/removal state of a cap, or a state in which the use of the aerosol generating device 1 is limited (e.g., a state in which an incompatible battery is coupled), and the first display may output the information to the outside. For example, the first display may be in the form of an LED light-emitting element. For example, the first display may be a first LCD, a first OLED, or the like.

The first audio output unit may audible information to the user about the aerosol generating device 1. For example, the first audio output unit may convert an electric signal into an audio signal and output the audio signal to the outside.

The aerosol generating device 1 may further include a memory (not shown). The memory may include at least one type of storage medium from among a flash memory type, a hard disk type, a multimedia card micro type, a card type memory (e.g., Secure Digital (SD) or eXtreme Digital (XD) memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory may store data or the like regarding an operating time of the aerosol generating device 1, the maximum number of puffs, the current number of puffs, at least one temperature profile, and a smoking pattern of the user.

As described above with reference to other drawings, the aerosol generating device may further include a processor (not shown), an identification unit (not shown), and a battery coupling unit (not shown). The battery coupling unit may accommodate a battery.

In response to a signal generated by the liquid sensor, the processor may control other configurations of the aerosol generating device 1.

According to an embodiment of the present disclosure, in a case where a signal regarding liquid penetration is received from the liquid sensor 141, when it is determined that liquid penetrated between the body 10 and the battery cover 17, the processor 13 may stop power supply of the battery 12 and stop all operations of the aerosol generating device 1, thereby minimizing damage caused by the liquid.

According to an embodiment of the present disclosure, the processor 13 may control a display (not shown) of an output unit in response to a signal generated by the liquid sensor 141.

According to an embodiment of the present disclosure, the processor 13 may control an audio output unit (not shown) of an output unit in response to a signal generated by the liquid sensor 141.

According to an embodiment of the present disclosure, the processor 13 may store information corresponding to a signal generated by the liquid sensor 141. The information stored in the memory may be useful to analyze a cause of a problem when liquid-related problem occurs in the aerosol generating device 1 thereafter.

The aerosol generating device 1 may include an external device 1000. The aerosol generating device 1 may further include a communication unit (not shown) to communicate with the external device 1000. The communication unit may include at least one element for communication with the external device 1000. For example, the communication unit may include at least one of a short-range communication unit and a wireless communication unit.

The short-range wireless communication unit may include a Bluetooth communication unit, a Bluetooth low energy (BLE) communication unit, a near field communication unit, a wireless local area network (WLAN) (Wi-Fi) communication unit, a ZigBee communication unit, an infrared data association (IrDA) communication unit, a Wi-Fi Direct (WFD) communication unit, an ultra wideband (UWB) communication unit, an Ant+ communication unit, and the like, but is not limited thereto.

The wireless communication unit may include a cellular network communication unit, an Internet communication unit, a computer network (e.g., local area network (LAN) or wide area network (WAN)) communication unit, and the like, but is not limited thereto.

The external device 1000 may include a second display for outputting visual information. The external device may include a second audio output unit for outputting auditory information.

The aerosol generating device 1 and the external device 1000 may be referred to as an aerosol generating system.

The aerosol generating device 1 may transmit, to the external device 1000, information corresponding to a signal generated by a liquid sensor. For example, the processor may control the communication unit to transmit, to the external device 1000, information corresponding to a signal generated by the liquid sensor.

The external device 1000 may control elements included in the external device 1000 in response to the information received from the aerosol generating device 1. For example, the external device 1000 may control the second display in response to the information received from the aerosol generating device 1. In another example, the external device 1000 may control the second audio output unit in response to the information received from the aerosol generating device 1.

According to an embodiment of the present disclosure, when information about liquid penetration is received from the aerosol generating device 1, the external device 1000 may control the second display to output visual information to remove and/or replace the battery from the aerosol generating device 1. In another example, when information about liquid penetration is received from the aerosol generating device 1, the external device 1000 may control the second display to output visual information to stop using the aerosol generating device 1 and stop power.

According to an embodiment of the present disclosure, the external device 1000 may control the second audio output unit in response to the information received from the aerosol generating device 1. For example, when information about liquid penetration is received from the aerosol generating device 1, the external device 1000 may control the second audio output unit to output auditory information to remove and/or replace the battery from the aerosol generating device 1. In another example, when a signal regarding liquid penetration is received from the aerosol generating device 1, the external device 1000 may control the second audio output unit to output auditory information to stop using the aerosol generating device 1 and stop power. In another example, when a signal regarding liquid penetration is received from the aerosol generating device 1, the external device 1000 may control the second audio output unit to output an alert sound.

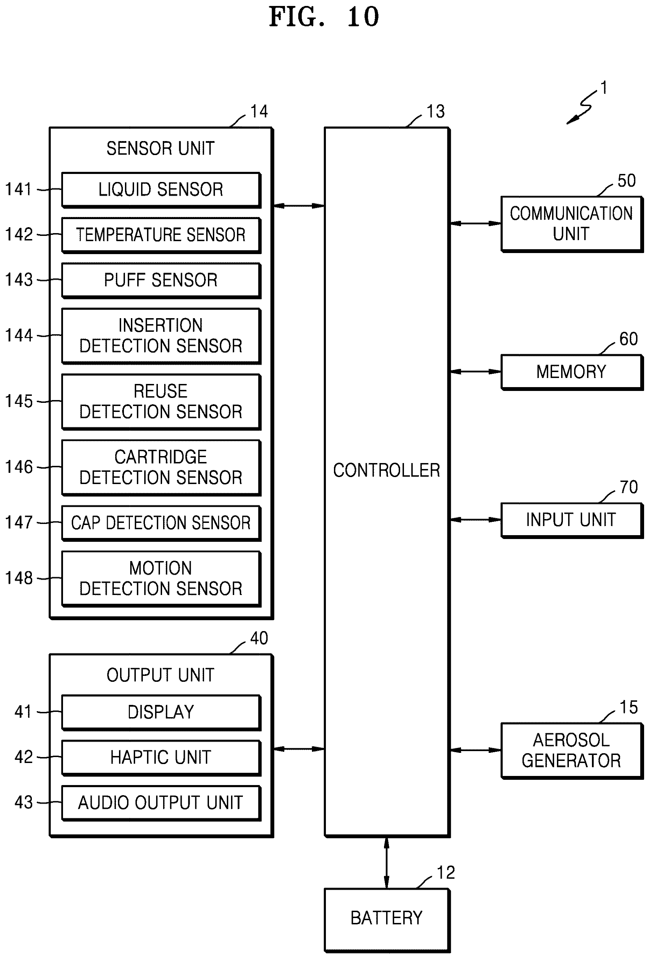

FIG. 10 is a block diagram of an aerosol generating device according to an embodiment of the present disclosure.

The aerosol generating device 1 may include a battery 12, a controller 13, a sensor unit 14, an output unit 40, an input unit 70, a communicator 50, a memory 60, and at least one aerosol generator 15. However, an internal structure of the aerosol generating device 1 is not limited to that illustrated in FIG. 10. In other words, according to the design of the aerosol generating device 1, one of ordinary skill in the art related to the present embodiment that some of the components shown in FIG. 13 may be omitted or new components may be added.

The sensor unit 14 may detect a state of the aerosol generating device 1 or a state around the aerosol generating device 1 and transmit detected information to the controller 13. On the basis of the detected information, the controller 13 may control the aerosol generating device 1 to perform various functions such as control of operations of the cartridge aerosol generator 15 and/or the stick aerosol generator 15, a restriction on smoking, determination of whether or not the stick and/or the cartridge 19 are inserted, and a notification display.

The sensor unit 14 may include at least one of a liquid sensor 131, a temperature sensor 142, a puff sensor 143, an insertion detection sensor 144, a reuse detection sensor 145, a cartridge detection sensor 146, a cap detection sensor 147, and a motion detection sensor 148.

The liquid sensor 141 may detect a liquid penetrating between the battery cover and the main body. The explanation of the liquid sensor 141 will be provided later by referring to other drawings.

The temperature sensor 142 may detect a temperature at which the cartridge aerosol generator 15 and/or the stick aerosol generator 15 are heated. The aerosol generating device 1 may include a separate temperature sensor for detecting the temperatures of the cartridge aerosol generator 15 and/or the stick aerosol generator 15, or the cartridge aerosol generator 15 and/or the stick aerosol generator 15 may operate as temperature sensors.

The temperature sensor 142 may output a signal corresponding to the temperature of the cartridge aerosol generator 15 and/or the stick aerosol generator 15. For example, the temperature sensor 142 may include a resistor element whose resistance value changes in correspondence to a change in the temperature of the cartridge aerosol generator 15 and/or the stick aerosol generator 15. The temperature sensor 142 may be implemented by a thermistor or the like, which is an element using a property of changing resistance according to temperature. Here, the temperature sensor 142 may output a signal corresponding to the resistance value of the resistor element as a signal corresponding to the temperature of the cartridge aerosol generator 15 and/or the stick aerosol generator 15. For example, the temperature sensor 142 may include a sensor that detects a resistance value of the cartridge aerosol generator 15 and/or the stick aerosol generator 15. Here, the temperature sensor 142 may output a signal corresponding to the resistance value of the cartridge aerosol generator 15 and/or the stick aerosol generator 15 as a signal corresponding to the temperature of the cartridge aerosol generator 15 and/or the stick aerosol generator 15.

The temperature sensor 142 may be arranged around the battery 12 to monitor a temperature of the battery 12. The temperature sensor 142 may be arranged adjacent to the battery 12. For example, the temperature sensor 142 may be attached to one surface of a battery that is the battery 12. For example, the temperature sensor 142 may be mounted on one surface of a PCB.

The temperature sensor 142 may be arranged inside the body to detect an internal temperature of the body.

The puff sensor 143 may detect a puff by a user on the basis of various physical changes in an air flow path. The puff sensor 143 may output a signal corresponding to the puff. For example, the puff sensor 143 may be a pressure sensor. The puff sensor 143 may output a signal corresponding to internal pressure of the aerosol generating device 1. Here, the internal pressure of the aerosol generating device 1 may correspond to pressure of the air flow path through which a gas flows. The puff sensor 143 may be arranged in correspondence to the air flow path through which the gas flows in the aerosol generating device 1.

The insertion detection sensor 144 may detect insertion and/or removal of the stick. The insertion detection sensor 144 may detect a signal change due to the insertion and/or removal of the stick. The insertion detection sensor 144 may be installed around an insertion space. The insertion detection sensor 144 may detect the insertion and/or removal of the stick according to a change in a dielectric constant inside the insertion space. For example, the insertion detection sensor 144 may be an inductive sensor and/or a capacitance sensor.

The inductive sensor may include at least one coil. The coil of the inductive sensor may be arranged adjacent to the insertion space. For example, when a magnetic field changes around the coil through which a current flows, characteristics of the current flowing through the coil may change according to Faraday's law of electromagnetic induction. Here, the characteristics of the current flowing through the coil may include a frequency of an alternating current, a current value, a voltage value, an inductance value, an impedance value, and the like.

The inductive sensor may output a signal corresponding to the characteristics of the current flowing through the coil. For example, the inductive sensor may output a signal corresponding to an inductance value of the coil.

The capacitance sensor may include a conductor. The conductor of the capacitance sensor may be arranged adjacent to the insertion space. The capacitance sensor may output a signal corresponding to an ambient electromagnetic characteristic, e.g., a capacitance around the conductor. For example, when the stick including a metal wrapper is inserted into the insertion space, the electromagnetic characteristic around the conductor may be changed by the wrapper of the stick.

The reuse detection sensor 145 may detect whether or not the stick is reused. The reuse detection sensor 145 may be a color sensor. The color sensor may detect a color of the stick. The color sensor may detect a color of a portion of the wrapper wrapping the outside of the stick. The color sensor may detect a value for an optical characteristic corresponding to a color of an object, on the basis of light reflected from the object. For example, the optical characteristic may be a wavelength of light. The color sensor may be implemented as a single component with a proximity sensor or may be implemented as a separate component distinguished from the proximity sensor.

At least a portion of the wrapper constituting the stick may have a color changing by an aerosol. When the stick is inserted into the insertion space, the reuse detection sensor 145 may be arranged in correspondence to a location at which at least the portion of the wrapper whose color changes by the aerosol is arranged. For example, before the stick is used by the user, the color of at least the portion of the wrapper may be a first color. Here, when at least the portion of the wrapper is wetted by the aerosol while the aerosol generated by the aerosol generating device 1 passes through the stick, the color of at least the portion of the wrapper may be changed to a second color. The color of at least the portion of the wrapper may be maintained in the second color after changing from the first color to the second color.

The cartridge detection sensor 146 may detect mounting and/or removal of the cartridge 19. The cartridge detection sensor 146 may be implemented by an inductance-based sensor, a capacitive sensor, a resistance sensor, a hall sensor (a hall IC) using a hall effect, or the like.

The cap detection sensor 147 may detect mounting and/or removal of a cap. When the cap is detached from the body, a portion of the cartridge 19 and the body covered by the cap may be exposed to the outside. The cap detection sensor 147 may be implemented by a contact sensor, a hall sensor (a hall IC), an optical sensor, or the like.

The motion detection sensor 148 may detect a motion of the aerosol generating device 1. The motion detection sensor 148 may be implemented as at least one of an acceleration sensor and a gyro sensor.

In addition to the sensors 141 to 147 described above, the sensor unit 14 may further include at least one of a humidity sensor, an atmospheric pressure sensor, a magnetic sensor, a position sensor (e.g., a global positioning system (GPS)), and a proximity sensor. Functions of the respective sensors may be intuitively inferred from names thereof by one of ordinary skill in the art, and thus, detailed descriptions thereof may be omitted.

The output unit 40 may output information regarding the state of the aerosol generating device 1 and provide the information to the user. The output unit 40 may include at least one of a display 41, a haptic unit 42, and a sound output unit 43, but is not limited thereto. When the display 41 and a touch pad form a layer structure to form a touch screen, the display 41 may be used as an input device in addition to an output device.

The display 41 (e.g., display 130 of Fig.4) may visually provide the user with information regarding the aerosol generating device 1. For example, the information regarding the aerosol generating device 1 may refer to various types of information such as a charging/discharging state of the battery 12 of the aerosol-generating device 1, a preheating state of the aerosol generator 15, the insertion/removal state of the stick and/or the cartridge 19, the mounting/removal state of the cap, and the restriction on use of the aerosol generating device 1 (e.g., detection of an abnormal article), and the display 41 may output the information to the outside. For example, the display 41 may be in the form of a light emitting diode (LED) light emitting device. For example, the display 41 may be a liquid crystal display (LCD) panel, an organic light emitting display (OLED) panel, or the like.

The haptic unit 42 may tactilely provide the user with the information regarding the aerosol generating device 1 by converting an electrical signal into a mechanical stimulus or an electrical stimulus. For example, when initial power is supplied to the cartridge aerosol generator 15 and/or the stick aerosol generator 15 for a set time, the haptic unit 42 may generate vibration corresponding to completion of initial preheating. The haptic unit 42 may include a vibration motor, a piezoelectric element, or an electrical stimulation device.

The sound output unit 43 may audibly provide the user with the information regarding the aerosol generating device 1. For example, the sound output unit 43 may convert the electrical signal into a sound signal and output the sound signal to the outside.

The battery 12 may supply power used to operate the aerosol generating device 1. The battery 12 may supply power so that the cartridge aerosol generator 15 and/or the stick aerosol generator 15 may be heated. In addition, the battery 12 may supply power needed for operations of the sensor unit 14, the output unit 40, the input unit 70, the communicator 50, and the memory 60, which are other components provided within the aerosol generating device 1. The battery 12 may be a rechargeable battery or a disposable battery. For example, the battery 12 may be a lithium polymer (LiPoly) battery, but is not limited thereto.

Although not shown in FIG. 10, the aerosol generating device 1 may further include a power protection circuit. The power protection circuit may be electrically connected to the battery 12 and may include a switching element.

The power protection circuit may cut off an electrical path for the battery 12 according to a certain condition. For example, the power protection circuit may cut off the electrical path for the battery 12 when a voltage level of the battery 12 is a first voltage or more corresponding to overcharging. For example, the power protection circuit may cut off the electrical path for the battery 12 when the voltage level of the battery 12 is less than a second voltage corresponding to overdischarge.

The aerosol generator 15 may be supplied with power from the battery 12 and heat a medium or an aerosol generating material within the stick. Although not shown in FIG. 10, the aerosol generating device 1 may further include a power conversion circuit (e.g., a DC/DC converter) that converts power of the battery 12 and supplies the converted power to the cartridge aerosol generator 15 and/or the stick aerosol generator 15. In addition, when the aerosol generating device 1 generates an aerosol by an induction heating method, the aerosol generating device 1 may further include a DC/AC converter that converts DC power of the battery 12 into AC power.

The controller 13, the sensor unit 14, the output unit 40, the input unit 70, the communicator 50, and the memory 60 may be supplied with power from the battery 12 to perform functions. Although not shown in FIG. 10, the aerosol generating device 1 may further include a power conversion circuit that converts power of the battery 12 and supplies the power to each of components, e.g., a low-dropout (LDO) circuit or a voltage regulator circuit. Also, although not shown in FIG. 10, a noise filter may be provided between the battery 12 and the aerosol generator 15. The noise filter may be a low pass filter. The low pass filter may include at least one inductor and a capacitor. A cutoff frequency of the low pass filter may correspond to a frequency of a high-frequency switching current applied from the battery 12 to the aerosol generator 15. The low pass filter may prevent a high-frequency noise component from being applied to the sensor unit 14, such as the insertion detection sensor 144.

In an embodiment, the cartridge aerosol generator 15 and/or the stick aerosol generator 15 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome, but is not limited thereto. In addition, the stick aerosol generator 15 may be implemented by a metal wire, a metal plate on which an electrically conductive track is arranged, or a ceramic heating element, but is not limited thereto.

In an embodiment, the stick aerosol generator 15 may include an induction heater. For example, the stick aerosol generator 15 may include a susceptor that generates heat through a magnetic field applied by a coil to heat an aerosol generating material.

The input unit 70 may receive information input from the user or output the information to the user. For example, the input unit 70 may be a touch panel. The touch panel may include at least one touch sensor for detecting a touch. For example, the touch sensor may include a capacitive touch sensor, a resistive touch sensor, a surface acoustic touch sensor, an infrared touch sensor, or the like, but is not limited thereto.

The display 41 and the touch panel may be implemented as one panel. For example, the touch panel may be inserted into the display 41 (e.g., may be an on-cell type or in-cell type). For example, the touch panel may be added on the display 41 (e.g., may be an add-on type).

Meanwhile, the input unit 70 may include a button, a keypad, a dome switch, a jog wheel, a jog switch, or the like, but is not limited thereto.

The memory 60 may be hardware for storing various types of data processed within the aerosol generating device 1 and may store pieces of data processed by the controller 13 and pieces of data to be processed by the controller 13. The memory 60 may include at least one type of storage medium from among a flash memory type, a hard disk type, a multimedia card micro type, a card type memory (e.g., a SD or XD memory or the like), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 60 may store data or the like regarding an operation time of the aerosol generating device 1, the maximum number of puffs, the current number of puffs, at least one temperature profile, and a smoking pattern of the user.

The communicator 50 may include at least one component for communication with another electronic device. For example, the communicator 50 may include at least one of a short-range wireless communication unit and a wireless communication unit.

The short-range wireless communication unit may include a Bluetooth communication unit, a Bluetooth low energy (BLE) communication unit, a near field communication unit, a wireless local area network ((WLAN) (Wi-Fi)) communication unit, a Zigbee communication unit, an infrared data association (IrDA) communication unit, a Wi-Fi Direct (WFD) communication unit, an ultrawideband (UWB) communication unit, an Ant+ communication unit, and the like, but is not limited thereto.

The wireless communication unit may include a cellular network communication unit, an Internet communication unit, a computer network (e.g., LAN or WAN) communication unit, and the like, but is not limited thereto.

Although not shown in FIG. 10, the aerosol generating device 1 may further include a connection interface such as a universal serial bus (USB) interface, and may connect with another external device through the connection interface such as a USB interface to transmit and receive information or charge the power 11.

The controller 13 may control an overall operation of the aerosol generating device 1. In an embodiment, the controller 13 may include at least one processor. The processor may be implemented as an array of a plurality of logic gates or may be implemented as a combination of a general-purpose microprocessor and a memory that stores a program executable by the microprocessor. In addition, the controller 13 may be implemented as other types of hardware.

The controller 13 may control the temperature of the aerosol generator 15 by controlling supply power from the battery 12 to the stick aerosol generator 15. The controller 13 may control the temperature of the cartridge aerosol generator 15 and/or the stick aerosol generator 15 on the basis of the temperature of the cartridge aerosol generator 15 and/or the stick aerosol generator 15 sensed by the temperature sensor 142. The controller 13 may adjust power supplied to the cartridge aerosol generator 15 and/or the stick aerosol generator 15, on the basis of the temperature of the cartridge aerosol generator 15 and/or the stick aerosol generator 15. For example, the controller 13 may determine a target temperature for the cartridge aerosol generator 15 and/or the stick aerosol generator 15, on the basis of a temperature profile stored in the memory 60.

The aerosol generating device 1 may include a power supply circuit (not shown) electrically connected to the battery 12 between the battery 12 and the cartridge aerosol generator 15 and/or the stick aerosol generator 15. The power supply circuit may be electrically connected to the cartridge aerosol generator 15, the stick aerosol generator 15, or an induction coil 181. The power supply circuit may include at least one switching element. The switching element may be implemented by a bipolar junction transistor (BJT), a field effective transistor (FET), or the like. The controller 13 may control the power supply circuit.

The controller 13 may control power supply by controlling switching of the switching element of the power supply circuit. The power supply circuit may be an inverter that converts DC power output from the battery 12 into AC power. For example, the inverter may include a full-bridge circuit or a half-bridge circuit including a plurality of switching elements.

The controller 13 may turn on the switching element so that power is supplied from the battery 12 to the cartridge aerosol generator 15 and/or the stick aerosol generator 15. The controller 13 may turn off the switching element to cut off the supply of power to the cartridge aerosol generator 15 and/or the stick aerosol generator 15. The controller 13 may adjust a current supplied from the battery 12 by adjusting a frequency and/or duty ratio of a current pulse input into the switching element.

The controller 13 may control a voltage output from the battery 12 by controlling switching of the switching element of the power supply circuit. The power conversion circuit may convert the voltage output from the battery 12. For example, the power conversion circuit may include a buck-converter that steps down the voltage output from the battery 12. For example, the power conversion circuit may be implemented through a buck-boost converter, a zener diode, or the like.

The controller 13 may adjust a level of the voltage output from the power conversion circuit by controlling an on/off operation of the switching element included in the power conversion circuit. When the switching element continues to be turned on, the level of the voltage output from the power conversion circuit may correspond to a level of a voltage output from the battery 12. The duty ratio for the on/off operation of the switching element may correspond to a ratio of the voltage output from the power conversion circuit to the voltage output from the battery 12. The level of the voltage output from the power conversion circuit may decrease with a decrease in the duty ratio for the on/off operation of the switching element. The stick aerosol generator 15 may be heated on the basis of the voltage output from the power conversion circuit.

The controller 13 may control power to be supplied to the aerosol generator 15 by using at least one of a pulse width modulation (PWM) method and a proportional-integral-differential (PID) method.

For example, the controller 13 may control a current pulse having a certain frequency and duty ratio to be supplied to the aerosol generator 15 by using the PWM method. The controller 13 may control the power supplied to the aerosol generator 15 by adjusting the frequency and duty ratio of the current pulse.

For example, the controller 13 may determine a target temperature to be controlled, on the basis of the temperature profile. The controller 13 may control the power supplied to the stick aerosol generator 15 by using the PID method, which is a feedback control method through a difference value between the temperature of the stick aerosol generator 15 and the target temperature, a value obtained by integrating the difference value over time, and a value obtained by differentiating the difference value over time.

The controller 13 may prevent the cartridge aerosol generator 15 and/or the stick aerosol generator 15 from overheating. For example, on the basis that the temperature of the cartridge aerosol generator 15 and/or the stick aerosol generator 15 exceeds a preset limit temperature, the controller 13 may control an operation of the power conversion circuit so that the supply of power to the cartridge aerosol generator 15 and/or the stick aerosol generator 15 stops. For example, on the basis that the temperature of the cartridge aerosol generator 15 and/or the stick aerosol generator 15 exceeds the preset limit temperature, the controller 13 may reduce an amount of power supplied to the cartridge aerosol generator 15 and/or the stick aerosol generator 15 by a certain ratio. For example, on the basis that the temperature of the cartridge aerosol generator 15 exceeds the preset limit temperature, the controller 13 may determine that the aerosol generating material accommodated in the cartridge 19 is exhausted and cut off the power supply to the cartridge aerosol generator 15.

The controller 13 may control charging and discharging of the battery 12. The controller 13 may identify the temperature of the battery 12 on the basis of an output signal of the temperature sensor 142.

When a power line is connected to a battery terminal of the aerosol generating device 1, the controller 13 may identify whether or not the temperature of the battery 12 is a first limit temperature or more which is a reference for blocking charging of the battery 12. When the temperature of the battery 12 is less than the first limit temperature, the controller 13 may control the battery 12 to be charged, on the basis of a preset charging current. The controller 13 may block charging of the battery 12 when the temperature of the battery 12 is the first limit temperature or more.

While the power of the aerosol generating device 1 is turned on, the controller 13 may identify whether or not the temperature of the battery 12 is a second limit temperature or more which is a reference for blocking discharge of the battery 12. The controller 13 may control power stored in the battery 12 to be used when the temperature of the battery 12 is less than the second limit temperature. When the temperature of the battery 12 is the second limit temperature or more, the controller 13 may stop using the power stored in the battery 12.

The controller 13 may calculate a remaining capacity of the power stored in the battery 12. For example, the controller 13 may calculate the remaining capacity of the battery 12 on the basis of a voltage and/or current sensing value of the battery 12.

The controller 13 may determine, through the insertion detection sensor 144, whether or not the stick is inserted into the insertion space. The controller 13 may determine that the stick is inserted, on the basis of the output signal of the insertion detection sensor 144. When determining that the stick is inserted into the insertion space, the controller 13 may control power to be supplied to the cartridge aerosol generator 15 and/or the stick aerosol generator 15. For example, the controller 13 may supply power to the cartridge aerosol generator 15 and/or the stick aerosol generator 15, on the basis of the temperature profile stored in the memory 60.

The controller 13 may determine whether or not the stick is removed from the insertion space. For example, the controller 13 may determine, through the insertion detection sensor 144, whether or not the stick is removed from the insertion space. For example, when the temperature of the aerosol generator 15 is the preset limit temperature or more or when a temperature change gradient of the aerosol generator 15 is a set gradient, the controller 13 may determine that the stick is removed from the insertion space. When determining that the stick is removed from the insertion space, the controller 13 may cut off the supply of power to the cartridge aerosol generator 15 and/or the stick aerosol generator 15.

The controller 13 may control a power supply time and/or a power supply amount with respect to the aerosol generator 15, according to a state of the stick detected by the sensor unit 14. The controller 13 may identify, on the basis of a look-up table, a level range including a level of a signal of the capacitance sensor. The controller 13 may determine an amount of moisture in the stick, according to the identified level range.

When the stick is over-humidified, the controller 13 may increase a preheating time of the stick compared to a normal state by controlling the power supply time with respect to the aerosol generator 15.

The controller 13 may determine, through the reuse detection sensor 145, whether or not the stick inserted into the insertion space is reused. For example, the controller 13 may compare a sensing value of a signal of the reuse detection sensor 145 with a first reference range including a first color and when the sensing value is included in the first reference range, determine that the stick is not used. For example, the controller 13 may compare the sensing value of the signal of the reuse detection sensor 145 with a second reference range including a second color and when the sensing value is included in the second reference range, determine that the stick is used. When determining that the stick is used, the controller 13 may cut off the supply of power to the cartridge aerosol generator 15 and/or the stick aerosol generator 15.

The controller 13 may determine, through the cartridge detection sensor 146, whether or not the cartridge 19 is coupled and/or removed. For example, the controller 13 may determine whether or not the cartridge 19 is coupled or removed, on the basis of a sensing value of the signal of the cartridge detection sensor 146.

The controller 13 may determine whether or not the aerosol generating material of the cartridge 19 is exhausted. For example, the controller 13 may apply power to preheat the cartridge aerosol generator 15 and/or the stick aerosol generator 15, determine whether or not the temperature of the cartridge aerosol generator 15 exceeds the limit temperature in a preheating period, and when the temperature of the cartridge aerosol generator 15 exceeds the limit temperature, determine that the aerosol generating material of the cartridge 19 is exhausted. When determining that the aerosol generating material of the cartridge 19 is exhausted, the controller 13 may cut off the supply of power to the cartridge aerosol generator 15 and/or the stick aerosol generator 15.

The controller 13 may determine whether or not the cartridge 19 may be usable. When the current number of puffs is greater than or equal to the maximum number of puffs set in the cartridge 19, the controller 13 may determine, on the basis of data stored in the memory 60, that the cartridge 19 may not be usable. For example, when the total time for which the cartridge aerosol generator 15 is heated is a preset maximum time or more or the total amount of power supplied to the cartridge aerosol generator 15 is a preset maximum amount of power or more, the controller 13 may determine that the cartridge 19 may not be usable.

The controller 13 may determine inhalation by the user through the puff sensor 143. For example, the controller 13 may determine whether or not a puff occurs, on the basis of a sensing value of a signal of the puff sensor 143. For example, the controller 13 may determine an intensity of the puff, on the basis of the sensing value of the signal of the puff sensor 143. When the number of puffs reaches the preset maximum number of puffs or when puffs are not detected for a preset time or more, the controller 13 may cut off the supply of power to the cartridge aerosol generator 15 and/or the stick aerosol generator 15.

The controller 13 may determine, through the cap detection sensor 147, whether a cap is coupled and/or removed. For example, the controller 13 may determine whether or not the cap is coupled and/or removed, on the basis of a sensing value of a signal of the cap detection sensor 147.

The controller 13 may control the output unit 40 on the basis of the result of detection by the sensor unit 14. For example, when the number of puffs counted through the puff sensor 143 reaches a preset number, the controller 13 may notify the user that the aerosol generating device 1 is soon terminated, through at least one of the display 41, the haptic unit 42, and the sound output unit 43. For example, the controller 13 may notify the user through the output unit 40 that the stick is not present in the insertion space, on the basis of the determination that the stick is not present in the insertion space. For example, the controller 13 may notify the user through the output unit 40 that the cartridge 19 and/or the cap are not mounted, on the basis of the determination that the cartridge 19 and/or the cap are not mounted. For example, the controller 13 may transmit information regarding the temperature of the cartridge aerosol generator 15 and/or the stick aerosol generator 15 to the user through the output unit 40.

The controller 13 may store and update, in the memory 60, a history of a certain event that occurs, on the basis of the occurrence of the event. The event may include detection of insertion of the stick, initiation of heating of the stick, detection of puffs, termination of the puffs, detection of overheating of the cartridge aerosol generator 15 and/or the stick aerosol generator 15, detection of application of an overvoltage to the cartridge aerosol generator 15 and/or the stick aerosol generator 15, termination of heating of the stick, an operation such as power on/off of the aerosol generating device 1, initiation of charging of the battery 12, detection of overcharging of the battery 12, termination of charging of the battery 12, and the like. The history of the event may include a date and time when the event occurs, log data corresponding to the event, and the like. For example, when the certain event is the detection of insertion of the stick, the log data corresponding to the event may include data regarding the sensing value of the insertion detection sensor 144 and the like. For example, when the certain event is the detection of overheating of the cartridge aerosol generator 15 and/or the stick aerosol generator 15, the log data corresponding to the event may include data regarding the temperature of the cartridge aerosol generator 15 and/or the stick aerosol generator 15, the voltage applied to the cartridge aerosol generator 15 and/or the stick aerosol generator 15, a current flowing through the cartridge aerosol generator 15 and/or the stick aerosol generator 15, and the like.

The controller 13 may control to form a communication link with an external device such as a mobile terminal of the user. When data regarding authentication is received from the external device through the communication link, the controller 13 may release a restriction on use of at least one function of the aerosol generating device 1. Here, the data regarding the authentication may include data indicating completion of user authentication for the user corresponding to the external device. The user may perform the user authentication through the external device. The external device may determine whether or not user data is valid, on the basis of the birthday of the user, a unique number indicating the user, and the like and receive, from an external server, data regarding use authority over the aerosol generating device 1. The external device may transmit the data indicating the completion of the user authentication to the aerosol generating device 1, on the basis of the data regarding the use authority. When the user authentication is completed, the controller 13 may release the restriction on the use of at least one function of the aerosol generating device 1. For example, when the user authentication is completed, the controller 13 may release a restriction on use of a heating function of supplying power to the aerosol generator 15.

The controller 13 may transmit data regarding the state of the aerosol generating device 1 to the external device through the communication link formed with the external device. On the basis of the received data regarding the state of the aerosol generating device 1, the external device may output the remaining capacity of the battery 12 of the aerosol generating device 1, an operation mode, and the like through a display of the external device.

The external device may transmit a location search request to the aerosol generating device 1, on the basis of an input for initiating a location search of the aerosol generating device 1. When receiving the location search request from the external device, the controller 13 may control at least one of output devices to perform an operation corresponding to the location search, on the basis of the received location search request. For example, the haptic unit 42 may generate vibration in response to the location search request. For example, the display 41 may output an object corresponding to the location search and an end of the search in response to the location search request.

When receiving firmware data from the external device, the controller 13 may control to perform a firmware update. The external device may identify a current version of firmware of the aerosol generating device 1 and determine whether or not a new version of the firmware is present. When an input for requesting firmware download is received, the external device may receive a new version of firmware data and transmit the new version of firmware data to the aerosol generating device 1. When receiving the new version of firmware data, the controller 13 may control the firmware update of the aerosol generating device 1 to be performed.

The controller 13 may transmit data regarding a sensing value of at least one sensor unit 14 to the external server (not shown) through the communicator 50, and receive from the server and store a learning model generated by learning the sensing value through machine learning such as deep learning. The controller 13 may perform an operation of determining an inhalation pattern of the user, an operation of generating a temperature profile, and the like by using the learning model received from the server. The controller 13 may store, in the memory 60, sensing value data of at least one sensor unit 14, data for training an artificial neural network (ANN), and the like. For example, the memory 60 may store a database for each component provided in the aerosol generating device 1, which is for training the ANN, and weights and biases constituting the structure of the ANN. The controller 13 may generate at least one learning model used for determining the inhalation pattern of the user, generating the temperature profile, and the like, by learning data regarding the sensing value of the at least one sensor unit 14, the inhalation pattern of the user, the temperature profile, and the like which are stored in the memory 60.

Some embodiments or other embodiments of the disclosure described above are not exclusive or distinct from each other.

Referring to FIG. 11, an aerosol generating system 100 may include the aerosol generating device 1 and an aerosol generating article 2.

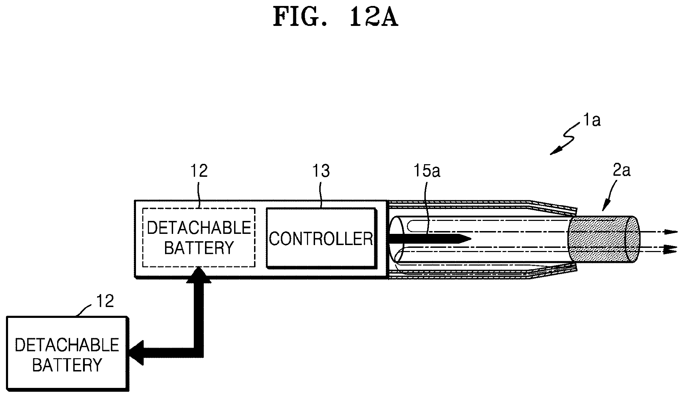

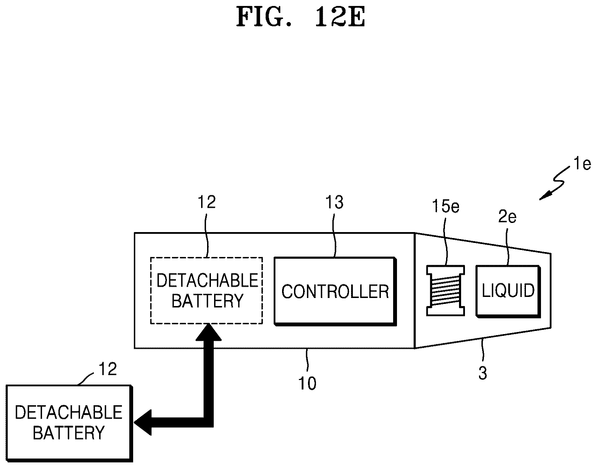

The aerosol generating device 1 may be a configuration corresponding to the aerosol generating devices 1a, 1b, 1c, 1d, and 1e of FIGS. 12A to 12E. The aerosol generating article 2 may be a configuration corresponding to cigarettes 2a, 2b, 2c, and 2d of FIGS. 12A to 12D. In addition, the aerosol generating article 2 may be a configuration corresponding to a liquid composition 2e of FIG. 12E.

An aerosol generating device 1 may generate and provide an aerosol.

The aerosol generating device 1 may include the body 10. The body 10 may form the overall exterior of the aerosol generating device 1, and a space may be provided in the body 10. At least one of a heater (15 of FIG. 15), a processor (13 of FIG. 15), an input unit 70, the output unit 40, a memory (60 of FIG. 15), an internal battery (19 of FIG. 15), a communication unit (50 of FIG. 15), a sensor unit (14 of FIG. 15), a water detection unit (200 of FIG. 15), and a terminal unit (161 of FIG. 15) may be arranged inside the body 10. A detachable battery (110 of FIG. 15) may be removably mounted on the aerosol generating device 1. When the detachable battery 12 is inserted into the aerosol generating device 1, the detachable battery 12 may be defined as an internal configuration of the aerosol generating device 1.

An article accommodation unit 11 may provide a space into which the aerosol generating article 2 may be insertably coupled (inserted). The aerosol generating article 2 may include an aerosol generating material which is heated by the aerosol generator 15 and generates an aerosol. The article accommodation unit 11 may provide a space which is opened toward the outside of the body 10 so that the aerosol generating article 2 may be inserted thereinto.

The article accommodation unit 11 may be recessed toward the inside of the body 10 so that at least a portion of the aerosol generating article 2 may be inserted thereinto. A depth by which the article accommodation unit 11 is recessed may correspond to a length of a portion of the aerosol generating article 2, the portion including an aerosol generating material and/or substrate. A portion of the aerosol generating article 2 may be inserted into the body 10, and another portion of the aerosol generating article 2 may protrude toward the outside of the body 10. A user may have, in his/her mouth, a portion of the aerosol generating article 2, the portion being exposed toward the outside of the body 10, and may suck in air including an aerosol.

The body 10 may form the overall exterior of the aerosol generating device 1, and may include an internal space in which elements of the aerosol generating device 1 may be arranged. In the drawings, only an embodiment is shown in which an overall cross-section of the body 10 is formed in the shape of a rectangular prism. However, a shape of the body 10 is not limited thereto, and the body 10 may be formed in a cylindrical shape or in a polygonal prism shape.

The body 10 may further include a cover 18 for opening or closing the article accommodation unit 11. The cover 18 may be movably arranged on the body 10 to expose the article accommodation unit 11 to the outside of the aerosol generating device 1, or may cover the article accommodation unit 11 so as not to expose the article accommodation unit 11 to the outside of the aerosol generating device 1. For example, the cover 18 may open the article accommodation unit 11 at a first position so that the article accommodation unit 11 is exposed to the outside, thereby allowing the aerosol generating article 2 to be inserted into the article accommodation unit 11. In addition, the cover 18 may close the article accommodation unit 11 while moving from a first position to a second position, so that the article accommodation unit 11 is not exposed to the outside, thereby protecting the article accommodation unit 11 from external impact or inflow of external foreign substances.

The aerosol generator 15 arranged inside the body 10 may heat the aerosol generating article 2. For example, the aerosol generator 15 may include a tubular heating element, a plate-shaped heating element, a needle-shaped heating element, or a rod-shaped heating element. The aerosol generator 15 may include an electrical resistance heater and/or an induction heater. When the aerosol generator 15 is configured as an induction heater, the aerosol generator 15 may include a susceptor and an induction coil. The aerosol generator 15 may be a configuration corresponding to aerosol generating devices 15a, 15b, 15c, 15d, and 15e of FIGS. 12A to 12E.

The detachable battery 12 may supply power so that the elements of the aerosol generating device 1 operate. The detachable battery 12 may be accommodated into the body 10 through the battery coupling unit (16 of FIG. 13). Depending on the embodiment, the aerosol generating device 1 may further include an internal battery 19 which is distinguished from the detachable battery 12 and is fixed inside the body 10. The internal battery 19 may have a lower output than the detachable battery 12, and even when the detachable battery 12 is not accommodated in the battery coupling unit 16, provide a minimum amount of power to the internal elements of the aerosol generating device 1.

The processor 13 may control an overall operation of the aerosol generating device 1. The processor 13 may be mounted on a printed circuit board (PCB). The processor 13 may receive a user input through the input unit 70, and control an operation of the aerosol generator 15 based on the user input. In addition, the processor 13 may control the output unit 40 to output state information of the aerosol generating device 1.

The input unit 70 may receive a user input. In an embodiment, the input unit 70 may be configured as a pressure-type push button or a touch sensor. The input unit 70 may be arranged to protrude in at least a partial area from an outer surface of the body 10, and may receive a user input in response to user's pressure or touch on the input unit 70.

The output unit 40 may output information about a state of the aerosol generating device 1. The output unit 40 may output a charge/discharge state of the detachable battery 12 and/or internal battery 19, a heating state of the aerosol generator 15, an insertion state of the aerosol generating article 2, and error information of the aerosol generating device 1. To this end, the output unit 40 may include a display, a haptic motor, and a sound output unit. The output unit 40 may be arranged in at least a partial area from an outer surface of the body 10. In FIG. 11, the output unit 40 is arranged in a -z direction with respect to the input unit 70. However, a position of the output unit 40 is not limited thereto.

FIGS. 12A to 12E are diagrams illustrating embodiments of the aerosol generating device of FIG. 11, implemented in various types.

Referring to FIGS. 12A to 12E, the aerosol generating device 1 may be implemented as various types of aerosol generating devices 1a to 1e, such as those using an electrical resistance heating method or an induction method, those additionally equipped with a vaporizer, or those using a cartridge method. FIGS. 12A to 12E merely show only some elements to describe types of the aerosol generating devices 1a to 1e, and other general elements may be further included in the aerosol generating devices 1a to 1e in addition to the elements shown in FIGS. 12A to 12E.

In FIG. 12A, the aerosol generating device 1a may include the detachable battery 12, an aerosol generator 15a, and the processor 13.

A cigarette 2a may be inserted into an accommodation space inside the aerosol generating device 1a. When the cigarette 2a is inserted into the aerosol generating device 1a, the aerosol generating device 1a may generate an aerosol from the cigarette 2a by heating the cigarette 2a by using the aerosol generator 15a. The generated aerosol may be transferred to a user through the cigarette 2a.

The aerosol generator 15a may be heated by power supplied from the detachable battery 12. The aerosol generator 15a may be an electrical resistance heater. For example, the aerosol generator 15a may include an electrically conductive track, and when currents flow through the electrically conductive track, the aerosol generator 15a may be heated.

The electrically conductive track of the aerosol generator 15a may be formed of an electrically resistive material, and thus, a heating temperature may be determined according to consumed power of the resistance, and a resistance value of the electrically conductive track may be set based on consumed power of the resistance of the electrically conductive track. The resistance value of the electrically conductive track may be variously set according to the material, length, width, thickness, pattern, or the like of the electrically resistive material.

The internal resistance of the electrically conductive track may increase as the temperature increases, based on the resistive temperature coefficient characteristic. For example, in a certain temperature section, the temperature of the electrically conductive track may be proportional to the resistance of the electrically conductive track. By using this principle, the aerosol generator 15a manufactured by including the electrically conductive track may heat the cigarette 2a through the electrically resistive method.

The electrically conductive track may be formed of tungsten, gold, platinum, silver, copper, nickel, palladium, or a combination thereof. Also, the electrically conductive track may be doped with an appropriate doping material and may include an alloy.

The aerosol generator 15a may be manufactured to have various shapes including a tube shape, a plate shape, a needle shape, a rod shape, etc. Also, the aerosol generator 15a may be arranged in a plural number. The aerosol generator 15a may be inserted into the cigarette 2a and used as an internal heating method to heat the inside of the cigarette 2a.

The detachable battery 12 may be removed or mounted from or on the aerosol generating device 1a. When the detachable battery 12 is mounted on the aerosol generating device 1a, power may be supplied from the detachable battery 12 to the aerosol generator 15a for heating operation of the aerosol generating device 1a, so as to control a temperature of the electrically conductive track.

The processor 13 may control the power supplied to the aerosol generator 15a to control the heating operation of the aerosol generator 15a. For example, the processor 13 may control a temperature at which the cigarette 2a is heated by the aerosol generator 15a, according to a temperature profile.

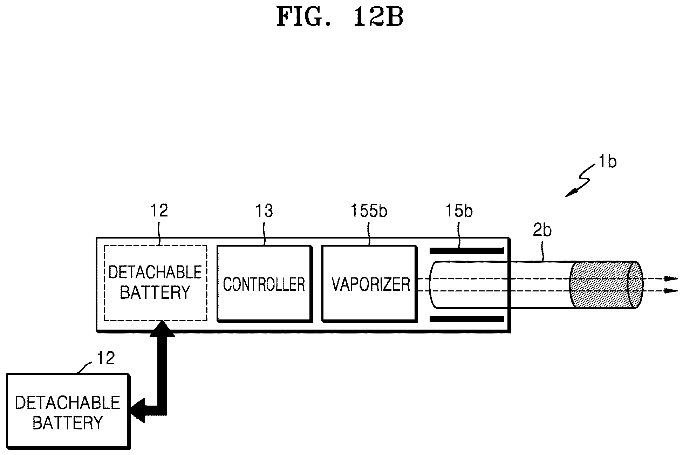

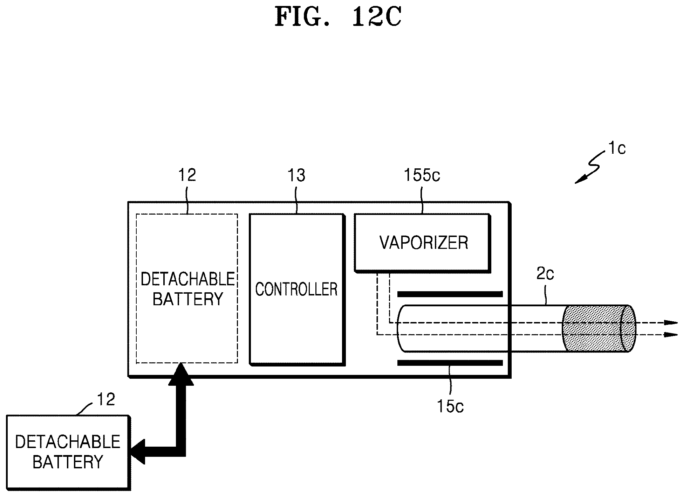

FIGS. 12B and 12C are diagrams for describing the aerosol generating devices 1b and 1c additionally including vaporizers 155b and 155c, according to some embodiments. Each of the aerosol generating devices 1b and 1c may be a type of the aerosol generating device 1.

Referring to FIGS. 12B and 12C, the aerosol generating devices 1b and 1c may further include the vaporizers 155b and 155c. The cigarettes 2b and 2c may be inserted into a space inside the aerosol generating devices 1b and 1c.

FIG. 12B shows the vaporizer 155b and the aerosol generator 15b are arranged in a row. However, FIG. 12C shows the vaporizer 155c and the aerosol generator 15c are arranged in parallel. That is, the aerosol generating devices 1b and 1c may be distinguished depending on an arrangement method of the vaporizer 155b.

The aerosol generators 15b and 15c may be heated by power supplied from the detachable battery 12. The aerosol generators 15b and 15c may include electrically resistive heaters, and may include, for example, an electrically conductive track.

Unlike the aerosol generator 15a described with reference to FIG. 12A, the aerosol generators 15b and 15c of FIGS. 12B and 12C may be arranged on the outer peripheries of the cigarettes 2b and 2c and implemented in an external heating method to heat the outer surfaces of the cigarettes 2b and 2c.

The vaporizers 155b and 155c may generate an aerosol by heating a liquid composition, and the generated aerosol may be transferred to a user by passing through the cigarettes 2b and 2c. That is, the aerosol generated by the vaporizers 155b and 155c may be transported along air flow paths of the aerosol generating devices 1b and 1c, and through the air flow paths, the aerosol generated by the vaporizers 155b and 155c may be configured to be transferred to the user through the cigarettes 2b and 2c.

The vaporizers 155b and 155c may include a liquid storage, a liquid delivery element, and a heating element (or a vaporizing element). However, each of the liquid storage, the liquid delivery element, and the heating element may be a separate module and may be arranged in other locations of the aerosol generating device 1, rather than being located in the vaporizers 155b and 155c.

The liquid storage may store a liquid composition. For example, the liquid composition may include a liquid including a tobacco-containing material including a volatile tobacco-flavor component or a liquid including a non-tobacco material. The liquid storage may be manufactured to be attached to/detached from the vaporizers 155b and 155c or may be integrally manufactured with the vaporizers 155b and 155c. For example, the liquid composition may include water, a solvent, ethanol, a plant extract, a spice, a flavor, or a vitamin mixture. In addition, the liquid composition may include an aerosol forming agent such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element included in the vaporizers 155b and 155c may be an element to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, an aerosol may be generated. Thus, the vaporizers 155b and 155c may also be referred to by other terms, such as "cartomizer" or "atomizer".

The detachable battery 12 may be removed from or mounted on the aerosol generating devices 1b and 1c. When the detachable battery 12 is mounted on the aerosol generating devices 1b and 1c, power may be supplied from the detachable battery 12 to the aerosol generators 15b and 15c and the vaporizers 155b and 155c for heating operations of the aerosol generators 15b and 15c and the vaporizers 155b and 155c.

The processor 13 may control the heating operations of the aerosol generators 15b and 15c and the vaporizers 155b and 155c by controlling the power supplied to the aerosol generators 15b and 15c and the vaporizers 155b and 155c. For example, the processor 13 may control a temperature at which the cigarettes 2b and 2c are heated by the aerosol generators 15b and 15c and the vaporizers 155b and 155c, according to a temperature profile.

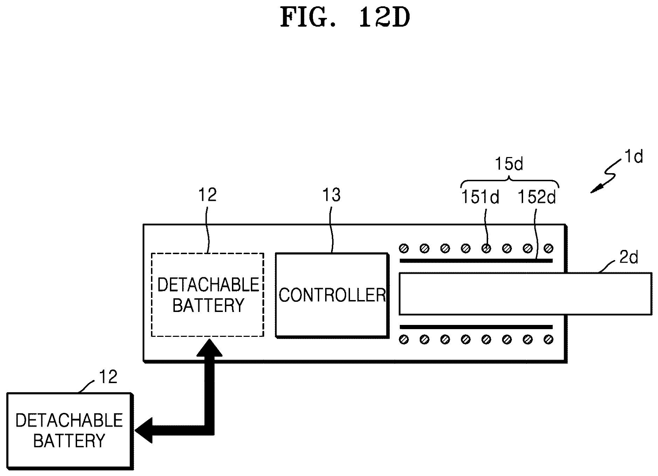

FIG. 12D is a view for describing the aerosol generating device 1d using an induction heating method according to an embodiment. The aerosol generating device 1d may be a type of the aerosol generating device 1.

Referring to FIG. 12D, the aerosol generating device 1d may include the aerosol generator 15d including a coil 41d and a susceptor 152d, the detachable battery 12, and the processor 13.

The aerosol generating device 1d may generate an aerosol by heating the cigarette 2d accommodated in the aerosol generating device 1d by using an induction heating method. The induction heating method may denote a method of making a magnetic material emit heat, by applying an alternating magnetic field, the direction of which cyclically changes, to the magnetic material emitting heat via an external magnetic field. Thus, the aerosol generating device 1d may make the magnetic material emit heat energy, by applying the alternating magnetic field to the magnetic material, and may deliver the heat energy emitted from the magnetic material to the cigarette to heat the cigarette 2d. Here, the magnetic material emitting heat through the external magnetic field may be the susceptor 152d. The susceptor 152d be provided in the aerosol generating device 1d. Alternatively, the susceptor 152d may be provided in the aerosol generating device 1d, and may instead be provided inside the cigarette 2d in the shape of a piece, a flake, or a strip.

The susceptor 152d may include a ferromagnetic substance. For example, the material of the susceptor 152d may include metal or carbon. The material of the susceptor 152d may include at least one of ferrite, a ferromagnetic alloy, stainless steel, and aluminum (Al). Also, the material of the susceptor 152d may include at least one of ceramic, such as graphite, zirconia, or the like, a transition metal, such as nickel (Ni), cobalt (Co), or the like, and a metalloid, such as boron (B), phosphorus (P), or the like.

The aerosol generating device 1d may include the cigarette 2d. A space to accommodate the cigarette 2d may be formed in the aerosol generating device 1d. The susceptor 152d may be arranged on the periphery of the space to accommodate the cigarette 2d. For example, the susceptor 152d may have a cylindrical shape surrounding the outside of the cigarette 2d. Accordingly, when the cigarette 2d is accommodated in the aerosol generating device 1d, the cigarette 2d may be accommodated in the accommodation space of the susceptor 152d, and the susceptor 152d may be arranged at a position surrounding at least a portion of the outer surface of the cigarette 2d. However, the shape of the susceptor 152d is not limited thereto and may vary. For example, the susceptor 152d may be manufactured in the shape of a rod which is inserted into the cigarette 2d.

The aerosol generator 15d may use an induction heating method, and the aerosol generator 15d may heat the cigarette 2d accommodated in the aerosol generating device 1d by using the susceptor 152d heating by an external magnetic field generated by the coil 41d.

The coil 41d may be arranged to be wound along an outer surface of the susceptor 152d and may apply an alternating magnetic field to the susceptor 152d. When power is supplied to the coil 41d from the aerosol generating device 1d, a magnetic field may be formed in an inner area of the coil 41d. When an alternating current is applied to the coil 41d, the direction of the magnetic field formed in the inner area of the coil 41d may constantly change. When the susceptor 152d is located in the inner area of the coil 41d and exposed to the alternating magnetic field, the direction of which cyclically changes, the susceptor 152d may emit heat and a cigarette accommodated in the susceptor 152d may be heated. The shape of the coil 41d may include a cylindrical shape wrapped in a lengthwise direction of the cigarette 2d, but is not limited thereto. The coil 41d may be realized as various types, such as a planar coil, etc.

The detachable battery 12 may be detached from or mounted on the aerosol generating device 1d, and when the detachable battery 12 is mounted on the aerosol generating device 1d, the power may be supplied, for example, to the coil 41d for the heating operation of the aerosol generator 15d.

The processor 13 may control the power supplied to the coil 41d to control the heating operation of the aerosol generator 15d. For example, the processor 13 may adjust the intensity of a magnetic field induced by the coil 41d according to a temperature profile, thereby controlling a temperature at which the cigarette 2d is heated by induction heating of the susceptor 152d.

FIG. 12E is a diagram for describing the aerosol generating device 1e equipped with the replaceable cartridge 3 containing the liquid composition 2e, according to an embodiment.

The aerosol generating device 1e of FIG. 12E may include the cartridge 3 containing the liquid composition 2e and the body 10 for supporting the cartridge 3. The aerosol generating device 1e may correspond to a type of the aerosol generating device 1. In this case, hardware configurations included in the aerosol generating device 1 may be divided and positioned in the body 10 and the cartridge 3.

The cartridge 3 may be coupled to the body 10 while accommodating the liquid composition 2e therein. A portion of the cartridge 3 may be inserted into a receptacle of the body 10 so that the cartridge 3 is mounted on the body 10.

The cartridge 3 may contain the liquid composition 2e including a liquid composition, but is not limited thereto and may contain the liquid composition 2e in any one state among a solid state, a gaseous state, or a gel state. For example, the liquid composition may include a liquid including a tobacco-containing material including a volatile tobacco-flavor component or a liquid including a non-tobacco material.

The aerosol generator 15e provided in the cartridge 3 may perform a heating operation by an electric signal or wireless signal transferred from the body 10. Accordingly, the liquid composition 2e inside the cartridge 3 may be vaporized due to heating of the aerosol generator 15e, thereby generating an aerosol.

The aerosol generator 15e may be realized as a conductive filament including a metal material, such as copper, nickel, tungsten, or the like, or a ceramic heating material, in order to heat, by generating heat via electrical resistance, the aerosol generating material delivered to the liquid delivery element, and may be wound along the liquid delivery element or arranged to be adjacent to the liquid delivery element.

The detachable battery 12 may be removed or mounted from or on the aerosol generating device 1e. When the detachable battery 12 is mounted on the aerosol generating device 1e, power may be supplied from the detachable battery 12 to the aerosol generator 15e for heating operation of the aerosol generating device 1e.

The processor 13 may control the power supplied to the aerosol generator 15e to control the heating operation of the aerosol generator 15e. For example, the processor 13 may control a temperature at which the liquid composition 2e is heated by the aerosol generator 15e, according to a temperature profile.

Meanwhile, although not shown in FIGS. 12A to 12E, the aerosol generating devices 1a to 1e may also form a system together with a separate cradle. For example, the cradle may store the aerosol generating devices 1a to 1e or charge the detachable batteries 12 of the aerosol generating devices 1a to 1e.

According to various embodiments, the aerosol generating device 1 of FIG. 11 may be implemented as at least one of the types of the aerosol generating devices 1a to 1e of FIGS. 12A to 12E, but is not limited thereto, and may be implemented in other types.

The aerosol generating devices 1a to 1e of FIGS. 12A to 12E may commonly use the detachable battery 12 as a power source. The detachable battery 12 may be mounted on/removed from the aerosol generating devices 1a to 1e and may be replaceable.

However, because an electrode in electrical contact with the detachable battery is exposed to the outside, water may penetrate into the electrode when the detachable battery 12 is replaced. When water penetrates into the electrode, overcurrent may be caused by a short circuit, which may cause a breakdown of the internal elements of the aerosol generating device 1. The present disclosure provides the aerosol generating device 1 capable of detecting water penetrating into an electrode in electrical contact with the detachable battery 12, notifying the user of the detected water, and forcibly removing the detachable battery 12, thereby preventing device failure.

FIG. 13 is an exploded perspective view of some configurations of an aerosol generating device, for describing a method of coupling and removing a detachable battery, according to an embodiment.

FIG. 13 shows only some configurations of the aerosol generating device 1, but elements of the aerosol generating device 1 are not limited to those shown in the drawings.

Referring to FIG. 13, the aerosol generating device 1 according to an embodiment may include the body 10, the detachable battery 12, and a magnetic coupling structure 162. The aerosol generating device 1 may be an embodiment of the aerosol generating device 1 of FIGS. 11 and 12A to 12B, and redundant descriptions thereof are omitted below.

The body 10 may form the overall exterior of the aerosol generating device 1, and the elements of the aerosol generating device 1 may be arranged in the body 10.

According to an embodiment, the body 10 may include the battery coupling unit 16 for accommodating the detachable battery 12. The battery coupling unit 16 may include a space for accommodating a battery, and thus may be referred to as a battery accommodation space. For example, the battery coupling unit 16 may be formed in one area (e.g., an area directed toward an x direction) of the body 10 to accommodate the detachable battery 12, but a position of the battery coupling unit 16 is not limited thereto.

The body electrode 161 may be arranged in the battery coupling unit 16, and the detachable battery 12 is coupled to or accommodated in the battery coupling unit 16, the body electrode 161 may come into contact with the battery electrode 121 of the detachable battery 12.

The body electrode 161 may include a first connection terminal 161a and a second connection terminal 161b which electrically contact the battery electrode 121. In addition, the battery electrode 121 may include a first battery electrode 121a electrically contacting the first connection terminal 161a and a second battery electrode 121b electrically contacting the second connection terminal 161b. The first battery electrode 121a may function as an anode and the second battery electrode 121b may function as a cathode.

Meanwhile, in FIG. 13, only an embodiment is described in which the first connection terminal 161a is arranged on one side of the battery coupling unit 16 and the second connection terminal 161b is arranged on the other side. However, an arrangement structure and number of the first connection terminal 161a and the second connection terminal 161b may vary depending on the design of the battery electrode 121 of the detachable battery 12.

The aerosol generating device 1 may further include the battery cover 17 which is detachably coupled to the body 10 to protect the detachable battery 12. The battery cover 17 may be detachably coupled to the body 10 and may open or close the battery coupling unit 16.

In an embodiment, when the battery cover 17 is detached from the body 10, the battery coupling unit 16 may be exposed to the outside of the aerosol generating device 1 so that the detachable battery 12 may be coupled to the battery coupling unit 16. In another example, when the battery cover 17 is coupled to the body 10, the battery cover 17 may cover the battery coupling unit 16 so that the battery coupling unit 16 is not exposed to the outside, thereby protecting the detachable battery 12 from external impact or inflow of external foreign substances.

The detachable battery 12 may be detachably coupled to the battery coupling unit 16 of the body 10 and may supply power for operation of the elements of the aerosol generating device 1. For example, when the detachable battery 12 is coupled to the battery coupling unit 16, the battery electrode 121 of the detachable battery 12 may come into contact with the body electrode 161, and accordingly, the detachable battery 12 and the aerosol generating device 1 may be electrically connected. The detachable battery 12 may supply power to the elements of the aerosol generating device 1 electrically connected thereto, so as to operate the elements of the aerosol generating device 1.

The magnetic coupling structure 162 may be arranged in one area of the battery coupling unit 16 and the body 10, and may be magnetically coupled to the detachable battery 12 to fix the detachable battery 12 to the battery coupling unit 16. To this end, the magnetic coupling structure 162 may include a first electromagnet 162a and a second electromagnet 162b. For example, the first electromagnet 162a and the second electromagnet 162b may be arranged in one area of the body 10 which is spaced apart from the battery coupling unit 16 in the z direction, and may be magnetically coupled to or disconnected from the detachable battery 12, under the control of the processor 13. The magnetic coupling structure 162 is a configuration for coupling with and disconnection from the detachable battery 12, and thus may be a configuration included in a disconnection unit 80 of FIG. 15.

The detachable battery 12 may further include a conductive member (not shown) coupled to the magnetic coupling structure 162 by magnetic force. The conductive member may be arranged inside or outside the detachable battery 12. The detachable battery 12 may include a first conductor 122a and a second conductor 122b. The first conductor 122a may be arranged at a position corresponding to the first electromagnet 162a and the second conductor 122b may be arranged at a position corresponding to the second electromagnet 162b of the detachable battery 12.

According to power supplied to the magnetic coupling structure 162, the first electromagnet 162a and the second electromagnet 162b may be magnetically coupled to or disconnected from the first conductor 122a and the second conductor 122b, respectively. In an embodiment, the first electromagnet 162a and the second electromagnet 162b may generate magnetic force under the control of the processor 13, and by the generated magnetic force, the first conductor 122a and the second conductor 122b may be magnetically coupled to the first electromagnet 162a and the second electromagnet 162b, respectively. In addition, the magnetic forces of the first electromagnet 162a and the second electromagnet 162b may be extinguished under the control of the processor 13, and the first conductor 122a and the second conductor 122b may be disconnected from the first electromagnet 162a and the second electromagnet 162b, respectively.

The aerosol generating device 1 of the present disclosure may stably fix the detachable battery 12 to the battery coupling unit 16 through the magnetic coupling structure 162, thereby preventing the detachable battery 12 from being unintentionally detached from the battery coupling unit 16. In addition, when water penetrates into the body electrode 161, the detachable battery 12 may be forcibly removed through the magnetic coupling structure 162 so as to prevent device failure.

FIG. 14 is a cross-sectional view of some configurations of an aerosol generating device, for describing a method of coupling and removing a detachable battery, according to an embodiment.

Referring to FIG. 14, the first electromagnet 162a and the second electromagnet 162b may be arranged inside or outside of one surface of the battery coupling unit 16. The first electromagnet 162a and the second electromagnet 162b may be a preset distance apart from each other. For example, the first electromagnet 162a and the second electromagnet 162b may be spaced apart from each other in the z direction. Because the first electromagnet 162a and the second electromagnet 162b are spaced apart from each other, the magnetic force may not be concentrated in one place. Thus, when the first electromagnet 162a and the second electromagnet 162b generate magnetic force, the coupling between the detachable battery 12 and the battery coupling unit 16 may be made more solid.

The first conductor 122a and the second conductor 122b may be arranged inside or outside one surface of the detachable battery 12. The first conductor 122a and the second conductor 122b may be arranged at positions corresponding to the first electromagnet 162a and the second electromagnet 162b.

The magnetic force of the first electromagnet 162a and the second electromagnet 162b may be generated or extinguished under the control of the processor 13. The processor 13 may apply or recover magnetic force to or from each of the first electromagnet 162a and the second electromagnet 162b by using power of the internal battery 19. To this end, the aerosol generating device 1 may further include a DC/DC converter and a DC/AC converter. For example, the processor 13 may control output of the internal battery 19 to apply or recover magnetic force to or from each of the first electromagnet 162a and the second electromagnet 162b.

When water has not penetrated into the body electrode 161, the processor 13 may supply power to the first electromagnet 162a and the second electromagnet 162b. Accordingly, each of the first electromagnet 162a and the second electromagnet 162b may generate magnetic force.

When water penetrated into the body electrode 161, the processor 13 may not supply power to at least one of the first electromagnet 162a and the second electromagnet 162b. In an embodiment, when water penetrated into the body electrode 161, the processor 13 may stop power supplied to the first electromagnet 162a. When the power supplied to the first electromagnet 162a is stopped, the coupling between the detachable battery 12 and the battery coupling unit 16 is performed only by magnetic force between the second electromagnet 162b and the second conductor 122b, and thus, the detachable battery 12 may be easily removed from the battery coupling unit 16 by external impact. In another embodiment, when water penetrated into the body electrode 161, the processor 13 may stop power supplied to both the first electromagnet 162a and the second electromagnet 162b. When the processor 13 stops power supplied to both the first electromagnet 162a and the second electromagnet 162b, the detachable battery 12 may be forcibly detached from the battery coupling unit 16. Therefore, device failure due to water penetration may be more completely prevented.

FIG. 15 is a block diagram of the inside of an aerosol generating device according to an embodiment.

Referring to FIG. 15, the aerosol generating device 1 may include the removable battery 110, the aerosol generator 15, the processor 13, the input unit 70, the output unit 40, the memory 60, the internal battery 19, the communication unit 50, the sensor unit 14, a water detection unit 90, and the disconnection unit 80. However, hardware elements inside the aerosol generating device 1 are not limited to those shown in FIG. 15. Depending on the design of the aerosol generating device 1, one of ordinary skill in the art related to the present embodiment could understand that some of the hardware elements shown in FIG. 1 may be omitted or new elements may be added.

The detachable battery 12 may supply power used to operate the aerosol generating device 1. For example, the detachable battery 12 may supply power so that the aerosol generator 15 is heated. In addition, the detachable battery 12 may supply power required for operation of other hardware elements provided in the aerosol generating device 1, i.e., the aerosol generator 15, the processor 13, the input unit 70, the output unit 40, the memory 60, the communication unit 50, the sensor unit 14, and the water detection unit 90. Depending on the embodiment, the detachable battery 12 may also supply power required for operation of the disconnection unit 80.

The detachable battery 12 may be, for example, a lithium polymer (LiPoly) battery or a lithium ion battery, but is not limited thereto.

The detachable battery 12 is a replaceable-type (removable) power source and may be mounted on or removed from the battery coupling unit 16 provided inside the aerosol generating device 1. The battery electrode 121 may be provided in the detachable battery 12, and when the detachable battery 12 is mounted on the aerosol generating device 1, the battery electrode 121 of the detachable battery 12 may be electrically connected to the body electrode 161 provided in the aerosol generating device 1 and implemented to supply power to the aerosol generating device 1.

The detachable battery 12 may have a charger interface which may connect to an external charger. Through the charger interface, power for charging the detachable battery 12 may be provided to the detachable battery 12. The detachable battery 12 may be charged by the external charger while coupled to the aerosol generating device 1 or while uninstalled from the aerosol generating device 1.

The detachable battery 12 may optionally have a near-field communication (NFC) tag. The NFC tag provided in the detachable battery 12 may be read through a protocol for short-range communication with an NFC module. The NFC tag of the detachable battery 12 may include a recording medium on which identification information related to the detachable battery 12, battery capacity information, or the like are recorded. Accordingly, the aerosol generating device 1 may obtain various information, such as whether the detachable battery 12 is an authenticated product or what the battery capacity is, based on the information received from the NFC tag of the detachable battery 12.

The aerosol generator 15 may receive power supply from the detachable battery 12 under the control of the processor 13. The aerosol generator 15 may heat a cigarette inserted into the aerosol generator 15 or a cartridge mounted on the aerosol generator 15 by using the power supplied from the detachable battery 12. In other words, the aerosol generator 15 may generate an aerosol by heating an aerosol generating material provided in the cigarette or cartridge.

The aerosol generator 15 may be positioned in the body of the aerosol generating device 1. Alternatively, when the aerosol generating device 1 is configured with a body and a cartridge, the aerosol generator 15 may be positioned in the cartridge. When the aerosol generator 15 is positioned in the cartridge, the aerosol generator 15 may receive power supply from the detachable battery 12 positioned in the body.

The aerosol generator 15 may be implemented as an electrical resistance heater or a heater using an induction heating method, and descriptions thereof are given with reference to FIGS. 12A to 12E.

The input unit 70 may receive a user input. For example, the input unit 70 may be implemented a single pressure-type push button. In another example, the input unit 70 may be a touch panel including at least one touch sensor. The input unit 70 may transfer an input signal to the processor 13. The processor 13 may supply power to the aerosol generator 15 based on a user input or control the output unit 40 to output a user notification.

The output unit 40 may output information about a state of the aerosol generating device 1. The output unit 40 may output a charge/discharge state of the detachable battery 12 and/or internal battery 19, a heating state of the aerosol generator 15, an insertion state of the aerosol generating article 2, and error information of the aerosol generating device 1. To this end, the output unit 40 may include a display, a haptic motor, and a sound output unit.

The sensor unit 14 may detect a state of the aerosol generating device 1 or a surrounding state of the aerosol generating device 1 and transmit detected information to the processor 13. To this end, the sensor unit 14 may include a temperature sensor, a puff sensor, and an insertion detection sensor. However, sensors included in the sensor unit 14 are not limited to the examples described above, and additional sensors may be included depending on the embodiment. For example, the sensor unit 14 may additionally include a reuse detection sensor, a motion detection sensor, a humidity sensor, a barometric pressure sensor, a magnetic sensor, a cover detachment detection sensor, a location sensor (a global positioning system (GPS)), a proximity sensor, and the like. When a function of a sensor is included in the name of each of the sensors, a detailed description of the function is omitted.

Based on the detected information, the processor 13 may control the aerosol generating device 1 to perform various functions, such as heating control of the aerosol generator 15, limiting smoking, determining whether the aerosol generating article 2 is inserted, and displaying a notification.

The communication unit 50 may include at least one communication module for communication with an external electronic device. The processor 13 may control the communication unit 50 and transmit information about the aerosol generating device 1 to the external electronic device. Alternatively, the processor 13 may receive information from the external electronic device through the communication unit 50 and control the elements included in the aerosol generating device 1. For example, information exchanged between the communication unit 50 and the external electronic device may include user authentication information, firmware update information, and user's smoking pattern information.

The memory 60 is hardware for storing various data processed in the aerosol generating device 1 and may include data processed and data to be processed in the processor 13. For example, the memory 60 may store an operation time of the aerosol generating device 1, the maximum number of puffs, the current number of puffs, at least one temperature profile, data on a user's smoking pattern, etc.

The internal battery 19 may be a configuration distinct from the detachable battery 12 and may be fixed inside the aerosol generating device 1. Unlike the detachable battery 12, the internal battery 19 may not be removable and may supply a minimum amount of power to the elements inside the aerosol generating device 1. A capacity of the internal battery 19 may be less than a capacity of the detachable battery 12. In addition, an output power of the internal battery 19 may be set to be less than an output power of the detachable battery 12.

The internal battery 19 may supply power to the elements inside the aerosol generating device 1 even when the detachable battery 12 is not mounted on the aerosol generating device 1. For example, the internal battery 19 may supply greater power than standby power to the processor 13 by request of the processor 13. In addition, the internal battery 19 may supply power to the disconnection unit 80 so as to fix the disconnection unit 80 to the aerosol generating device 1 or remove the detachable battery 12 from the aerosol generating device 1. However, unlike the detachable battery 12, the power output from the internal battery 19 may not be used for heating of the aerosol generator 15.

The power output from the internal battery 19 may be used when the detachable battery 12 is not mounted. For example, the power output from the internal battery 19 may be provided to the input unit 70, the output unit 40, the memory 60, the communication unit 50, and the sensor unit 14 when the detachable battery 12 is not mounted. Depending on the embodiment, the power output from the internal battery 19 may also be used when the detachable battery 12 is mounted. For example, the power output from the internal battery 19 may be provided to the water detection unit 90 and the disconnection unit 80 when the detachable battery 12 is mounted. However, the power may not be provided to the aerosol generator 15 irrespective of whether the detachable battery 12 is mounted.

The internal battery 19 may be charged by the detachable battery 12. For example, the internal battery 19 may be charged while the aerosol generator 15 is not heating.

The body electrode 161 is configured of a conductor and may be in electrical contact with the detachable battery 12. The body electrode 161 may transfer the output power of the detachable battery 12 to the elements inside the aerosol generating device 1. To this end, the body electrode 161 may include the first connection terminal 161a and the second connection terminal 161b.

The water detection unit 90 may detect water penetrating into the body electrode 161. The water detection unit 90 may be arranged adjacent to the body electrode 161 and may detect water penetrating into the body electrode 161 and, as a result of the detection, output a detection signal. The "water" detected by the water detection unit 90 may also be referred to as "liquid". In addition, the "water" is pure water, but may refer to liquid or moisture containing various materials.

The water detection unit 90 may be connected to the body electrode 161. The water detection unit 90 may be connected to at least one of the first connection terminal 161a and the second connection terminal 161b.

The water detection unit 90 may receive power supply from the detachable battery 12. Depending on the embodiment, the water detection unit 90 may also receive power from the internal battery 19.

The water detection unit 90 may transfer the detection signal to the processor 13 when water penetrates into the body electrode 161. When the detection signal is received from the water detection unit 90, the processor 13 may stop power supplied to the aerosol generator 15 even when a user input is received. The water detection unit 90 may control a normal operation of the aerosol generating device 1 when the detection signal is not received from the water detection unit 90. For example, the water detection unit 90 may heat the aerosol generator 15 according to a user input and control a temperature of the aerosol generator 15 according to a temperature profile. Detailed descriptions of the water detection unit 90 are described below with reference to FIG. 16 and below.

The processor 13 may be hardware for controlling an overall operation of the aerosol generating device 1. The processor 13 may include at least one processing unit, such as a micro controller unit (MCU). The processor 13 may be implemented as an array of a plurality of logic gates or as a combination of a general-purpose microprocessor and a memory in which a program executable in the microprocessor is stored. In addition, the processor 13 may also be implemented as other types of hardware.

The processor 13 may receive power supply through the internal battery 19 when the detachable battery 12 is not mounted or when water penetrates into the body electrode 161 and the detachable battery 12 is forcibly removed from the aerosol generating device 1. The processor 13 may update information about time by using the internal battery 19 or control the output unit 40 to output information according to a user input. For example, the processor 13 may control the output unit 40 to output time information, insertion information of the detachable battery 12, and smoking information.

When the detachable battery 12 is normally inserted, the processor 13 may control power output from the detachable battery 12 to heat the aerosol generator 15. For example, the processor 13 may control an amount and supply time of the power output from the detachable battery 12 so that the aerosol generator 15 is heated according to a preset temperature profile. In addition, the processor 13 may sense a puff of a user by using the puff sensor inside the sensor unit 14 and then, control the temperature of the aerosol generator 15. In addition, the processor 13 may count the number of puffs by using the puff sensor, and then, when the number of puffs has reached a preset number, the power supply to the aerosol generator 15 may be stopped. The processor 13 may also control the output unit 40 based on a sensing result. For example, when the number of puffs are counted by using the puff sensor and then the number of puffs has reached the preset number, the processor 13 may notify the user that the aerosol generating device 1 will soon be terminated, by using a lamp, a motor, or a speaker.

FIG. 16 is a circuit diagram of a water detection unit according to an embodiment.

Referring to FIG. 16, the detachable battery 12 may have an internal resistance Rs and may be removably contact the first connection terminal 161a and the second connection terminal 161b. For example, the anode of the detachable battery 12 may electrically contact the first connection terminal 161a and the cathode of the detachable battery 12 may electrically contact the second connection terminal 161b. When the detachable battery 12 electrically contacts the connection terminals 161a and 161b in a designated direction, the detachable battery 12 may provide power to the elements inside the aerosol generating device 1.

However, in a state in which the detachable battery 12 electrically contacts the connection terminals 161a and 161b in a designated direction, when water penetrates into the connection terminals 161a and 161b, the connection terminals 161a and 161b may be instantaneously connected to a ground terminal through the low-resistance water, causing a high current or voltage to be generated. Such high current or voltage affects durability of the elements inside of the aerosol generating device 1, and thus, a measure is necessary to protect the aerosol generating device 1 by detecting liquid penetration into these connection terminals 161a and 161b.

The present disclosure may include the water detection unit 90 which detects water penetrating into the body electrode 161 and outputs a detection signal as a result of the detection. To this end, the water detection unit 90 may include a detection element unit 91 and a signal generation unit 92.

The water detection unit 90 may be connected to at least one of the first connection terminal 161a and the second connection terminal 161b. FIG. 16 shows an embodiment in which the water detection unit 90 is connected to the first connection terminal 161a. However, depending on the embodiment, the water detection unit 90 may be connected to the second connection terminal 161b or may be connected to each of the first connection terminal 161a and the second connection terminal 161b.

The detection element unit 91 may be driven by the detachable battery 12 or the internal battery 19, and may be configured with elements for detecting water penetrating into the body electrode 161. The detection element unit 91 may include a detection electrode TS, at least one resistance element R, a first switching element SW1, and a second switching element SW2.

The detection electrode TS may be configured as a conductor and may detect a detection voltage generated by water penetrating into the body electrode 161. The detection voltage may refer to an instantaneous high voltage generated by water penetrating into the body electrode 161.

The detection electrode TS may be arranged adjacent to at least one of the first connection terminal 161a and the second connection terminal 161b. The detection electrode TS may be arranged adjacent to a connection terminal to which the water detection unit 90 is connected. For example, when the water detection unit 90 is connected to the first connection terminal 161a, the detection electrode TS may be arranged adjacent to the first connection terminal 161a arranged on one surface of the battery coupling unit 16 and may be exposed to the outside. Below, a case is described in which the detection electrode TS is arranged adjacent to the first connection terminal 161a.

The detection voltage may be generated between the first connection terminal 161a and the detection electrode TS by water penetrating into the body electrode 161.

The resistance element R may be connected to the detection electrode TS and may force the detection voltage. The resistance element R may force the detection voltage to protect internal elements of the circuit. In addition, the resistance element R may also be used to induce reverse bias voltage or forward bias voltage of the first switching element SW1 described below. FIG. 16 describes only an embodiment in which the water detection unit 90 includes one resistance element R. However, depending on the embodiment, the resistance element R may be provided in a plural number.

The first switching element SW1 may be connected to a resistance element R1. In an embodiment, the first switching element SW1 may be configured as an NPN-type bipolar junction transistor (BJT). The first switching element SW1 may include a first terminal connected to the resistance element R, a second terminal connected to a ground terminal, and a third terminal in which a current path with the second terminal is created by a voltage input to the first terminal. When the first switching element SW1 is an NPN type, the first terminal may be a base B, the second terminal may be an emitter E, and the third terminal may be a collector C. In addition, when a forced detection voltage is applied to the base B, a current path may be formed from the collector C in a direction toward the emitter E.

The second switching element SW2 may be connected to the first switching element SW1. The second switching element SW2 may be connected to the first switching element SW1 and the first connection terminal 161a, and may electrically connect and disconnect the first connection terminal 161a and the signal generation unit 92, depending on turn-on/turn-off of the first switching element SW1. In an embodiment, the second switching element SW2 may be configured as a relay switch.

When the second switching element SW2 is configured as a relay switch, the second switching element may include a coil and a switch. The coil may be connected to the third terminal of the first switching element SW1, and when the first switching element SW1 is turned on, the switch may be pulled in one direction to connect the first connection terminal 161a and the signal generation unit 92.

The signal generation unit 92 may be connected to the second switching element SW2 and may generate a detection signal according to a detection result of the detection element unit 91. The signal generation unit 92 may transfer the detection signal to the processor 13. The signal generation unit 92 may be driven by using power of the detachable battery 12 and/or the internal battery 19.

FIG. 17 is a diagram for describing a circuit operation according to a water detection result of the water detection unit of FIG. 16.

Referring to FIG. 17, when water penetrates into the connection terminals 161a and 161b while the detachable battery 12 electrically contacts the connection terminals 161a and 161b in a designated direction, an instantaneously high voltage may be applied between the first connection terminal 161a and the detection electrode TS. The detection electrode TS may detect a detection voltage Vs generated by water which penetrated into the body electrode 161.

The resistance element R may force the detection voltage Vs to protect the internal elements of the circuit. In addition, the resistance element R may be arranged for a bias voltage of the first switching element SW1. The forced detection voltage Vs may be provided to the base B of the first switching element SW1, and accordingly, a current path may be formed from the collector C in the direction toward the emitter E.

Power supplied to the first connection terminal 161a may flow to a ground terminal GND by the current path provided by the first switching element SW1, and accordingly, the coil of the second switching element SW2 may pull the switch in the direction to the coil and electrically connect the first connection terminal 161a and the signal generation unit 92. In other words, the power of the first connection terminal 161a may be supplied to the signal generation unit 92 through a first current path Path1. As described above, a submergence detection circuit of the present disclosure may detect water penetration into the body electrode 161 by using the power of the detachable battery 12 rather than the internal battery 19.

The signal generation unit 92 may generate a detection signal S1 according to the detection result of the detection element unit 91 and transmit same to the processor 13. In an embodiment, the signal generation unit 92 may output power received from the first connection terminal 161a as the detection signal S1. In this case, the signal generation unit 92 may output the detection result by using the power of the detachable battery 12 rather than the internal battery 19. In another embodiment, when power is received from the first connection terminal 161a, the signal generation unit 92 may generate the detection signal S1 by using the internal battery 19 and transmit same to the processor 13.

FIG. 18 is a diagram for describing an operating method of an output unit according to a water detection result of the water detection unit of FIG. 16.

Referring to FIG. 18, when the detection signal S1 is received from the signal generation unit 92, the processor 13 may stop power supplied to the aerosol generator 15 even when a user input is received through the input unit 70. This is to more completely protect the internal elements of the device by stopping power supplied to the aerosol generator 15, which consumes the most power among the internal elements of the aerosol generating device 1.

The processor 13 may output a water detection result through the output unit 40. For example, while power supplied to the aerosol generator 15 is stopped, the processor 13 may control the output unit 40 to output, through the certain display 41, a text 41b, such as "submergence detected", along with a graphic object 41a corresponding to the water detection result. In this case, the graphic object 41a and the text 41b may blink.

Meanwhile, a driving power of the output unit 40 of FIG. 18 may be provided from the internal battery 19. This is to minimize power supply to the internal elements of the aerosol generating device 1 when submergence was detected, thereby more completely protecting the internal elements of the device.

FIGS. 19A and 19B are diagrams for describing a method of coupling and removing a detachable battery according to a water detection result of the water detection unit of FIG. 16.

FIGS. 19A and 19B show a process in which the detachable battery 12 changes from a state of being coupled to the battery coupling unit 16 to a state of being forcibly removed, when water penetrated into the body electrode 161.

Referring to FIGS. 19A and 19B, the processor 13 may control the disconnection unit 80 to release electrical contact between the detachable battery 12 and the body electrode 161. Meanwhile, FIGS. 19A and 19B are diagrams for describing coupling and removal of the detachable battery 12 according to a control signal of the processor 13, and a configuration, such as the internal battery 19 and a power conversion unit (not shown), may be further needed between the detachable battery 12 and the processor 13.

The disconnection unit 80 may include the magnetic coupling structure 162. The magnetic coupling structure 162 may include the first electromagnet 162a arranged at a position corresponding to the first conductor 122a of the detachable battery 12 and the second electromagnet 162b arranged at a position corresponding to the second conductor 122b of the detachable battery 12.

The processor 13 may magnetically couple the detachable battery 12 and the body electrode 161 by using a first magnetic signal sm1. For example, the processor 13 may move the detachable battery 12 in the -x direction by using the first magnetic signal sm1. In addition, the processor 13 may release the magnetic coupling between the detachable battery 12 and the body electrode 161 by using a second magnetic signal sm2. For example, the processor 13 may move the detachable battery 12 in the +x direction by using the first magnetic signal sm1.

When the detachable battery 12 is accommodated in the battery coupling unit 16, the processor 13 may fix the detachable battery 12 to the battery coupling unit 16 by using the first magnetic signal sm1 irrespective of whether water penetrated. The processor 13 may control an output of the internal battery 19 by using the first magnetic signal sm1 so as to control at least one of the first electromagnet 162a and the second electromagnet 162b to generate magnetic force. In an embodiment, when the detachable battery 12 is accommodated in the battery coupling unit 16, the processor 13 may control the first electromagnet 162a and the second electromagnet 162b to generate magnetic force, by using the first magnetic signal sm1 irrespective of whether water penetrated. In another embodiment, when the detachable battery 12 is accommodated in the battery coupling unit 16, the processor 13 may control only the first electromagnet 162a to generate magnetic force, by using the first magnetic signal sm1 irrespective of whether water penetrated, and then also control the second electromagnet 162b to generate magnetic force only when it is confirmed that no water penetrated.

When the detection signal S1 is received from a signal generation unit 220, the processor 13 may determine that water penetrated into the body electrode 161. In addition, when it is determined that water penetrated into the body electrode 161, the processor 13 may release the magnetic coupling between the detachable battery 12 and the body electrode 161 by using the second magnetic signal sm2. In other words, the processor 13 may forcibly remove the detachable battery 12 from the battery coupling unit 16 by using the second magnetic signal sm2.

The processor 13 may control both the first electromagnet 162a and the second magnetic signal sm2 to not generate magnetic force, by using the second magnetic signal sm2. Accordingly, the detachable battery 12 may be removed from the battery coupling unit 16.

Meanwhile, the removal of the detachable battery 12 of FIGS. 19A and 19B may be performed after the submergence result is notified through the output unit 40 of FIG. 18. In other words, the processor 13 may notify the user of the submergence state through the output unit 40, and forcibly remove the detachable battery 12 from the battery coupling unit 16 when the detachable battery 12 is not removed from the battery coupling unit 16 even after a predetermined time has elapsed.

FIG. 20 is a flowchart of an operating method of an aerosol generating device, according to an embodiment.

Referring to FIG. 20, in operation S1010, the water detection unit 90 may detect water penetrating through the body electrode 161, which electrically contacts the detachable battery 12.

The water detection unit 90 may be connected to the body electrode 161. The water detection unit 90 may be connected to at least one of the first connection terminal 161a and the second connection terminal 161b. The water detection unit 90 may receive power supply from the detachable battery 12. Depending on the embodiment, some configurations of the water detection unit 90 may also receive power from the internal battery 19.

The water detection unit 90 may transfer the detection signal S1 to the processor 13 when water penetrates into the body electrode 161.

In operation S1020, the processor 13 may determine whether water penetrated into the body electrode 161, based on the detection signal S1.

The detection signal S1 may be generated from the signal generation unit 92 within the water detection unit 90. In an embodiment, the signal generation unit 92 may output power received from the first connection terminal 161a as the detection signal S1. In this case, the signal generation unit 92 may output the detection result by using the power of the detachable battery 12 rather than the internal battery 19. In another embodiment, when power is received from the first connection terminal 161a, the signal generation unit 92 may generate the detection signal S1 by using the internal battery 19 and transmit same to the processor 13.

In operation S1030, when the detection signal S1 is received from the signal generation unit 92, the processor 13 may determine that water penetrated into the body electrode 161 and stop power supplied to the aerosol generator 15.

When it is determined that water penetrated into the body electrode 161, the processor 13 may stop the power supplied to the aerosol generator 15 even when a user input was received through the input unit 70.

In operation S1040, when it is determined that water penetrated into the body electrode 161, the processor 13 may detect a water detection result through the output unit 40.

The processor 13 may control the output unit 40 to output the water detection result while the power supplied to the aerosol generator 15 is stopped. For example, the output unit 40 may output a graphic object corresponding to the water detection result.

In operation S1050, the processor 13 may remove the detachable battery 12 from the battery coupling unit 16 when it is determined that water penetrated into the body electrode 161.

The processor 13 may control the disconnection unit 80 while the power supplied to the aerosol generator 15 is stopped, so as to remove the detachable battery 12 from the aerosol generating device 1. To this end, the disconnection unit 80 may include the magnetic coupling structure 162 in which magnetic force is generated or extinguished under the control of the processor 13.

The magnetic coupling structure 162 may fix the detachable battery 12 to the aerosol generating device 1 by the generated magnetic force, or remove the detachable battery 12 from the aerosol generating device 1 by the extinguished magnetic force.

The processor 13 may control the disconnection unit 80 within a preset period of time from an end time point of the output of the water detection result through the output unit 40, so as to forcibly remove the detachable battery 12 from the aerosol generating device 1. For example, the preset period of time may be 3 seconds, but is not limited thereto.

In operation S1060, when the detection signal S1 is not received from the signal generation unit 92, the processor 13 may determine that water has not penetrated into the body electrode 161, and control the power supplied to the aerosol generator 15 according to a user input.

When water has not penetrated into the body electrode 161, the processor 13 may receive a user input through the input unit 70, and initiate heating of the aerosol generator 15 based on the user input. In addition, the aerosol generator 15 may be heated according to a preset temperature profile.

Any of the embodiments or other embodiments of the present disclosure described above are not mutually exclusive or distinct. Any of the embodiments or other embodiments of the present disclosure described above may be combined or combined in their respective configurations or functions.

For example, it means that the A configuration described in a specific embodiment and/or the drawings and the B configuration described in another embodiment and/or the drawings may be combined. That is, even if the combination between the configurations is not directly described, it means that the combination is possible, except in cases where the combination is described as impossible.

The above detailed description should not be construed as limiting in all respects, but should be considered as illustrative. The scope of the present disclosure should be determined by a reasonable interpretation of the appended claims, and all changes within the equivalent scope of the present disclosure are included in the scope of the present disclosure.

### Industrial Applicability

The present disclosure relates to an aerosol generating device which includes a battery coupling unit capable of accommodating a removable battery, and is capable of detecting liquid penetrating into an electrode in contact with a detachable battery, and an aerosol generating system including same.

## Claims

1. An aerosol generating device which generates an aerosol, the aerosol generating device comprising:
a body which forms an exterior of the aerosol generating device;
an aerosol generator configured to generate an aerosol from an aerosol generating material;
a battery coupling unit to which a battery for power supply is removably coupled;
a battery cover which is removably coupled to the body and optionally opens or closes the battery coupling unit;
a liquid sensor configured to detect a liquid that penetrated between the body and the battery cover and generate a signal according to whether the liquid is detected; and
a processor configured to control the aerosol generating device in response to the signal generated by the liquid sensor.

2. The aerosol generating device of claim 1, wherein the liquid sensor comprises a first pad and a second pad, and
the first pad and the second pad are each electrically conductive, are arranged a certain distance apart from each other, and face each other.

3. The aerosol generating device of claim 2, wherein the first pad is arranged in the body and
the second pad is arranged in the battery cover.

4. The aerosol generating device of claim 2, wherein the liquid sensor is configured to generate a signal in response to whether there is an electrical connection between the first pad and the second pad.

5. The aerosol generating device of claim 2, wherein the liquid sensor is configured to generate a signal in response to a change in an electric capacity between the first pad and the second pad.

6. The aerosol generating device of claim 1, wherein the liquid sensor is electrically conductive, comprises an electrical resistor, and is configured to generate a signal in response to a change in an electrical resistance value of the electrical resistor.

7. The aerosol generating device of claim 1, further comprising a sealing member arranged between the body and the battery cover to prevent liquid penetration between the body and the battery cover toward the battery coupling unit.

8. The aerosol generating device of claim 1, further comprising a first display for outputting visual information,
wherein the processor is configured to control the display in response to the signal generated by the liquid sensor.

9. The aerosol generating device of claim 1, further comprising a first audio output unit for outputting auditory information,
wherein the processor is configured to control the audio output unit according to the signal generated by the liquid sensor.

10. The aerosol generating device of claim 1, wherein the processor is configured to stop power supply of the battery in response to the signal generated by the liquid sensor when it is determined that the liquid penetrated between the body and the battery cover.

11. The aerosol generating device of claim 1, further comprising a memory for storing information,
wherein the processor is configured to store, in the memory, information corresponding to the signal generated by the liquid sensor.

12. An aerosol generating system comprising:
the aerosol generating device of claim 1; and
an external device communicable with the aerosol generating device,
wherein the aerosol generating device is configured to transmit, to the external device, information corresponding to the signal generated by the liquid sensor.

13. The aerosol generating system of claim 12, wherein the external device comprises a second display for outputting visual information and is configured to control the second display in response to the information received from the aerosol generating device.

14. The aerosol generating system of claim 12, wherein the external device comprises a second audio output unit for outputting auditory information and is configured to control the second audio output unit in response to the information received from the aerosol generating device.
